# EUROPEAN PATENT APPLICATION

(11) **EP 4 485 817 A1**
(43) Date of publication of application: **01.01.2025**
(21) Application number: 23216936.7
(22) Date of filing: 14.12.2023
(51) Int. Cl.: H04B 7/06, H04L 1/00, H04L 5/00

(54) **APPARATUS, SYSTEM, AND METHOD OF COMMUNICATING UNEQUAL MODULATION AND CODING SCHEME, MCS, UEM, INFORMATION**

(30) Priority: 29.06.2023 US 202318344745
(71) Applicant: INTEL Corporation, Santa Clara, CA 95054 (US)
(72) Inventor: SONG, Hao, Santa Clara, 95054 (US); LI, Qinghua, Santa Clara, 95054 (US); STACEY, Robert, Santa Clara, 95054 (US); GUREVITZ, Assaf, Santa Clara, 95054 (US); KENNEY, Thomas J., Santa Clara, 95054 (US)
(74) Representative: Rummler, Felix

(57) **Abstract**

For example, an Access Point (AP) may be configured to set Resource Unit (RU) allocation information in a Signal (SIG) field, the RU allocation information configured to indicate an RU allocation for a user; to set Unequal Modulation and Coding Scheme (MCS) (UEM) information for the user in the SIG field, the UEM information for the user configured to indicate an assignment of a plurality of MCSs to a plurality of frequency sub-channels in the RU allocation for the user, respectively; and to transmit a Downlink (DL) Physical layer (PHY) Protocol Data Unit (PPDU) including the SIG field and a data field for the user, wherein the data field for the user is configured according to the assignment of the plurality of MCSs to the plurality of frequency sub-channels in the RU allocation for the user.

## Description

### TECHNICAL FIELD

Aspects described herein generally relate to communicating Unequal Modulation and Coding Scheme (MCS) (UEM) information.

### BACKGROUND

Devices in a wireless communication system may be configured to communicate according to communication protocols, which may utilize a Modulation and Coding Scheme (MCS).

### BRIEF DESCRIPTION OF THE DRAWINGS

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. The figures are listed below.
Fig. 1 is a schematic block diagram illustration of a system, in accordance with some demonstrative aspects.
Fig. 2 is a schematic illustration of a user-specific field format, in accordance with some demonstrative aspects.
Fig. 3 is a schematic illustration of a user field format, in accordance with some demonstrative aspects.
Fig. 4 is a schematic illustration of a user-specific field format, in accordance with some demonstrative aspects.
Fig. 5 is a schematic illustration of a format of a user field to identify one or more Unequal Modulation and Coding Scheme (MCS) (UEM) fields, in accordance with some demonstrative aspects.
Fig. 6 is a schematic illustration of a user-specific field format, in accordance with some demonstrative aspects.
Fig. 7 is a schematic illustration of a UEM field format, in accordance with some demonstrative aspects.
Fig. 8 is a schematic flow-chart illustration of a method of communicating UEM information, in accordance with some demonstrative aspects.
Fig. 9 is a schematic flow-chart illustration of a method of communicating UEM information, in accordance with some demonstrative aspects.
Fig. 10 is a schematic illustration of a product of manufacture, in accordance with some demonstrative aspects.

### DETAILED DESCRIPTION

In the following detailed description, numerous specific details are set forth in order to provide a thorough understanding of some aspects. However, it will be understood by persons of ordinary skill in the art that some aspects may be practiced without these specific details. In other instances, well-known methods, procedures, components, units and/or circuits have not been described in detail so as not to obscure the discussion.

Discussions herein utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

The terms "plurality" and "a plurality", as used herein, include, for example, "multiple" or "two or more". For example, "a plurality of items" includes two or more items.

References to "one aspect", "an aspect", "demonstrative aspect", "various aspects" etc., indicate that the aspect(s) so described may include a particular feature, structure, or characteristic, but not every aspect necessarily includes the particular feature, structure, or characteristic. Further, repeated use of the phrase "in one aspect" does not necessarily refer to the same aspect, although it may.

As used herein, unless otherwise specified the use of the ordinal adjectives "first", "second", "third" etc., to describe a common object, merely indicate that different instances of like objects are being referred to, and are not intended to imply that the objects so described must be in a given sequence, either temporally, spatially, in ranking, or in any other manner.

Some aspects may be used in conjunction with various devices and systems, for example, a User Equipment (LTE), a Mobile Device (MD), a wireless station (STA), a Personal Computer (PC), a desktop computer, a mobile computer, a laptop computer, a notebook computer, a tablet computer, a server computer, a handheld computer, a handheld device, a wearable device, a sensor device, an Internet of Things (IoT) device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some aspects may be used in conjunction with devices and/or networks operating in accordance with existing IEEE 802.11 standards (including IEEE 802.11-2020 (IEEE 802.11-2020, IEEE Standard for Information Technology Telecommunications and Information Exchange between Systems Local and Metropolitan Area Networks-Specific Requirements; Part 11: Wireless LAN Medium Access Control (MAC) and Physical Layer (PHY) Specifications, December, 2020*);* and/or IEEE 802.11be (IEEE P802.11be/D3.1 Draft Standard for Information technology- Telecommunications and information exchange between systems Local and metropolitan area networks- Specific requirements; Part 11: Wireless LAN Medium Access Control (MAC) and Physical Layer (PHY) Specifications; Amendment 8: Enhancements for extremely high throughput (EHT), March 2023)) and/or future versions and/or derivatives thereof, devices and/or networks operating in accordance with existing cellular specifications and/or protocols, and/or future versions and/or derivatives thereof, units and/or devices which are part of the above networks, and the like.

Some aspects may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multistandard radio devices or systems, a wired or wireless handheld device, e.g., a Smartphone, a Wireless Application Protocol (WAP) device, or the like.

Some aspects may be used in conjunction with one or more types of wireless communication signals and/or systems, for example, Radio Frequency (RF), Infra-Red (IR), Frequency-Division Multiplexing (FDM), Orthogonal FDM (OFDM), Orthogonal Frequency-Division Multiple Access (OFDMA), FDM Time-Division Multiplexing (TDM), Time-Division Multiple Access (TDMA), Multi-User MIMO (MU-MIMO), Spatial Division Multiple Access (SDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth^{®}, Global Positioning System (GPS), Wi-Fi, Wi-Max, ZigBee^{™}, Ultra-Wideband (UWB), 4G, Fifth Generation (5G), or Sixth Generation (6G) mobile networks, 3GPP, Long Term Evolution (LTE), LTE advanced, Enhanced Data rates for GSM Evolution (EDGE), or the like. Other aspects may be used in various other devices, systems and/or networks.

The term "wireless device", as used herein, includes, for example, a device capable of wireless communication, a communication device capable of wireless communication, a communication station capable of wireless communication, a portable or non-portable device capable of wireless communication, or the like. In some demonstrative aspects, a wireless device may be or may include a peripheral that may be integrated with a computer, or a peripheral that may be attached to a computer. In some demonstrative aspects, the term "wireless device" may optionally include a wireless service.

The term "communicating" as used herein with respect to a communication signal includes transmitting the communication signal and/or receiving the communication signal. For example, a communication unit, which is capable of communicating a communication signal, may include a transmitter to transmit the communication signal to at least one other communication unit, and/or a communication receiver to receive the communication signal from at least one other communication unit. The verb communicating may be used to refer to the action of transmitting or the action of receiving. In one example, the phrase "communicating a signal" may refer to the action of transmitting the signal by a first device, and may not necessarily include the action of receiving the signal by a second device. In another example, the phrase "communicating a signal" may refer to the action of receiving the signal by a first device, and may not necessarily include the action of transmitting the signal by a second device. The communication signal may be transmitted and/or received, for example, in the form of Radio Frequency (RF) communication signals, and/or any other type of signal.

As used herein, the term "circuitry" may refer to, be part of, or include, an Application Specific Integrated Circuit (ASIC), an integrated circuit, an electronic circuit, a processor (shared, dedicated or group), and/or memory (shared. Dedicated, or group), that execute one or more software or firmware programs, a combinational logic circuit, and/or other suitable hardware components that provide the described functionality. In some aspects, some functions associated with the circuitry may be implemented by, one or more software or firmware modules. In some aspects, circuitry may include logic, at least partially operable in hardware.

The term "logic" may refer, for example, to computing logic embedded in circuitry of a computing apparatus and/or computing logic stored in a memory of a computing apparatus. For example, the logic may be accessible by a processor of the computing apparatus to execute the computing logic to perform computing functions and/or operations. In one example, logic may be embedded in various types of memory and/or firmware, e.g., silicon blocks of various chips and/or processors. Logic may be included in, and/or implemented as part of, various circuitry, e.g. radio circuitry, receiver circuitry, control circuitry, transmitter circuitry, transceiver circuitry, processor circuitry, and/or the like. In one example, logic may be embedded in volatile memory and/or non-volatile memory, including random access memory, read only memory, programmable memory, magnetic memory, flash memory, persistent memory, and the like. Logic may be executed by one or more processors using memory, e.g., registers, stuck, buffers, and/or the like, coupled to the one or more processors, e.g., as necessary to execute the logic.

Some demonstrative aspects may be used in conjunction with a WLAN, e.g., a WiFi network. Other aspects may be used in conjunction with any other suitable wireless communication network, for example, a wireless area network, a "piconet", a WPAN, a WVAN and the like.

Some demonstrative aspects may be used in conjunction with a wireless communication network communicating over a sub-10 Gigahertz (GHz) frequency band, for example, a 2.4GHz frequency band, a 5GHz frequency band, a 6GHz frequency band, and/or any other frequency band below 10GHz.

Some demonstrative aspects may be used in conjunction with a wireless communication network communicating over an Extremely High Frequency (EHF) band (also referred to as the "millimeter wave (mmWave)" frequency band), for example, a frequency band within the frequency band of between 20Ghz and 300GHz, for example, a frequency band above 45GHz, e.g., a 60GHz frequency band, and/or any other mmWave frequency band. Some demonstrative aspects may be used in conjunction with a wireless communication network communicating over the sub-10 GHz frequency band and/or the mmWave frequency band, e.g., as described below. However, other aspects may be implemented utilizing any other suitable wireless communication frequency bands, for example, a 5G frequency band, a frequency band below 20GHz, a Sub 1 GHz (S1G) band, a WLAN frequency band, a WPAN frequency band, and the like.

Some demonstrative aspects may be implemented by an mmWave STA (mSTA), which may include for example, a STA having a radio transmitter, which is capable of operating on a channel that is within the mmWave frequency band. In one example, mmWave communications may involve one or more directional links to communicate at a rate of multiple gigabits per second, for example, at least 1 Gigabit per second, e.g., at least 7 Gigabit per second, at least 30 Gigabit per second, or any other rate.

In some demonstrative aspects, the mmWave STA may include a Directional Multi-Gigabit (DMG) STA, which may be configured to communicate over a DMG frequency band. For example, the DMG band may include a frequency band wherein the channel starting frequency is above 45 GHz.

In some demonstrative aspects, the mmWave STA may include an Enhanced DMG (EDMG) STA, which may be configured to implement one or more mechanisms, which may be configured to enable Single User (SU) and/or Multi-User (MU) communication of Downlink (DL) and/or Uplink frames (UL) using a MIMO scheme. For example, the EDMG STA may be configured to implement one or more channel bonding mechanisms, which may, for example, support communication over a channel bandwidth (BW) (also referred to as a "wide channel", an "EDMG channel", or a "bonded channel") including two or more channels, e.g., two or more 2.16 GHz channels. For example, the channel bonding mechanisms may include, for example, a mechanism and/or an operation whereby two or more channels, e.g., 2.16 GHz channels, can be combined, e.g., for a higher bandwidth of packet transmission, for example, to enable achieving higher data rates, e.g., when compared to transmissions over a single channel. Some demonstrative aspects are described herein with respect to communication over a channel BW including two or more 2.16 GHz channels, however other aspects may be implemented with respect to communications over a channel bandwidth, e.g., a "wide" channel, including or formed by any other number of two or more channels, for example, an aggregated channel including an aggregation of two or more channels. For example, the EDMG STA may be configured to implement one or more channel bonding mechanisms, which may, for example, support an increased channel bandwidth, for example, a channel BW of 4.32 GHz, a channel BW of 6.48 GHz, a channel BW of 8.64 GHz, and/or any other additional or alternative channel BW. The EDMG STA may perform other additional or alternative functionality.

In other aspects, the mmWave STA may include any other type of STA and/or may perform other additional or alternative functionality. Other aspects may be implemented by any other apparatus, device and/or station.

The term "antenna", as used herein, may include any suitable configuration, structure and/or arrangement of one or more antenna elements, components, units, assemblies and/or arrays. In some aspects, the antenna may implement transmit and receive functionalities using separate transmit and receive antenna elements. In some aspects, the antenna may implement transmit and receive functionalities using common and/or integrated transmit/receive elements. The antenna may include, for example, a phased array antenna, a single element antenna, a set of switched beam antennas, and/or the like.

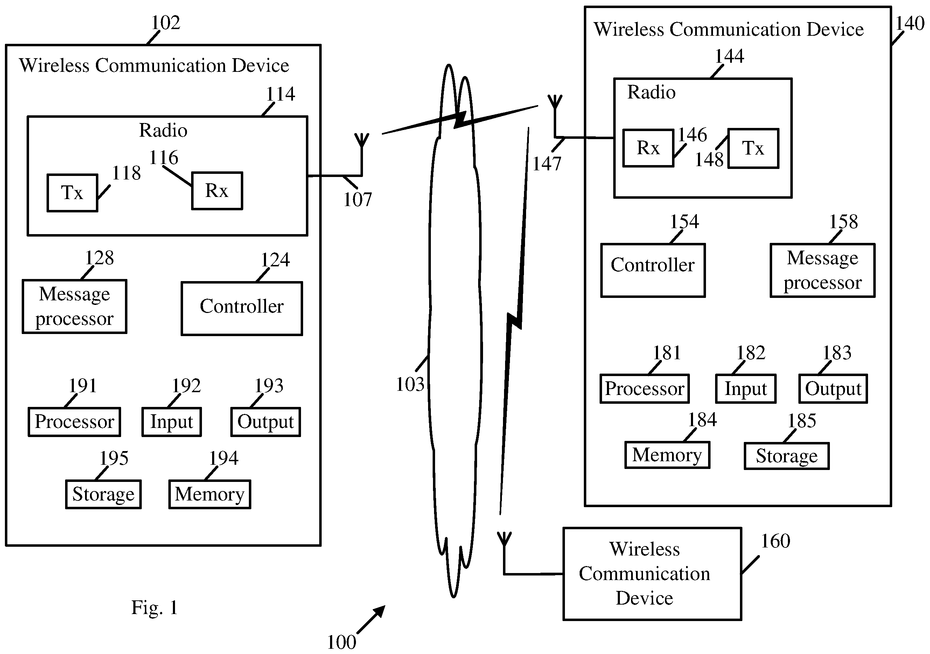

Reference is made to Fig. 1, which schematically illustrates a system 100, in accordance with some demonstrative aspects.

As shown in Fig. 1, in some demonstrative aspects, system 100 may include one or more wireless communication devices. For example, system 100 may include a wireless communication device 102, a wireless communication device 140, a wireless communication device 160, and/or one more other devices.

In some demonstrative aspects, devices 102, 140, and/or 160 may include a mobile device or a non-mobile, e.g., a static, device.

For example, devices 102, 140, and/or 160 may include, for example, a UE, an MD, a STA, an AP, a PC, a desktop computer, a mobile computer, a laptop computer, an Ultrabook^{™} computer, a notebook computer, a tablet computer, a server computer, a handheld computer, an Internet of Things (IoT) device, a sensor device, a handheld device, a wearable device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "Carry Small Live Large" (CSLL) device, an Ultra Mobile Device (UMD), an Ultra Mobile PC (UMPC), a Mobile Internet Device (MID), an "Origami" device or computing device, a device that supports Dynamically Composable Computing (DCC), a context-aware device, a video device, an audio device, an A/V device, a Set-Top-Box (STB), a Blu-ray disc (BD) player, a BD recorder, a Digital Video Disc (DVD) player, a High Definition (HD) DVD player, a DVD recorder, a HD DVD recorder, a Personal Video Recorder (PVR), a broadcast HD receiver, a video source, an audio source, a video sink, an audio sink, a stereo tuner, a broadcast radio receiver, a flat panel display, a Personal Media Player (PMP), a digital video camera (DVC), a digital audio player, a speaker, an audio receiver, an audio amplifier, a gaming device, a data source, a data sink, a Digital Still camera (DSC), a media player, a Smartphone, a television, a music player or the like.

In some demonstrative aspects, device 102 may include, for example, one or more of a processor 191, an input unit 192, an output unit 193, a memory unit 194, and/or a storage unit 195; and/or device 140 may include, for example, one or more of a processor 181, an input unit 182, an output unit 183, a memory unit 184, and/or a storage unit 185. Devices 102 and/or 140 may optionally include other suitable hardware components and/or software components. In some demonstrative aspects, some or all of the components of one or more of devices 102 and/or 140 may be enclosed in a common housing or packaging, and may be interconnected or operably associated using one or more wired or wireless links. In other aspects, components of one or more of devices 102 and/or 140 may be distributed among multiple or separate devices.

In some demonstrative aspects, processor 191 and/or processor 181 may include, for example, a Central Processing Unit (CPU), a Digital Signal Processor (DSP), one or more processor cores, a single-core processor, a dual-core processor, a multiple-core processor, a microprocessor, a host processor, a controller, a plurality of processors or controllers, a chip, a microchip, one or more circuits, circuitry, a logic unit, an Integrated Circuit (IC), an Application-Specific IC (ASIC), or any other suitable multi-purpose or specific processor or controller. Processor 191 may execute instructions, for example, of an Operating System (OS) of device 102 and/or of one or more suitable applications. Processor 181 may execute instructions, for example, of an Operating System (OS) of device 140 and/or of one or more suitable applications.

In some demonstrative aspects, input unit 192 and/or input unit 182 may include, for example, a keyboard, a keypad, a mouse, a touch-screen, a touch-pad, a track-ball, a stylus, a microphone, or other suitable pointing device or input device. Output unit 193 and/or output unit 183 may include, for example, a monitor, a screen, a touch-screen, a flat panel display, a Light Emitting Diode (LED) display unit, a Liquid Crystal Display (LCD) display unit, a plasma display unit, one or more audio speakers or earphones, or other suitable output devices.

In some demonstrative aspects, memory unit 194 and/or memory unit 184 includes, for example, a Random Access Memory (RAM), a Read Only Memory (ROM), a Dynamic RAM (DRAM), a Synchronous DRAM (SD-RAM), a flash memory, a volatile memory, a non-volatile memory, a cache memory, a buffer, a short term memory unit, a long term memory unit, or other suitable memory units. Storage unit 195 and/or storage unit 185 may include, for example, a hard disk drive, a disk drive, a solid-state drive (SSD), and/or other suitable removable or non-removable storage units. Memory unit 194 and/or storage unit 195, for example, may store data processed by device 102. Memory unit 184 and/or storage unit 185, for example, may store data processed by device 140.

In some demonstrative aspects, wireless communication devices 102, 140, and/or 160 may be capable of communicating content, data, information and/or signals via a wireless medium (WM) 103. In some demonstrative aspects, wireless medium 103 may include, for example, a radio channel, an RF channel, a WiFi channel, a cellular channel, a 5G channel, an IR channel, a Bluetooth (BT) channel, a Global Navigation Satellite System (GNSS) Channel, and the like.

In some demonstrative aspects, WM 103 may include one or more wireless communication frequency bands and/or channels. For example, WM 103 may include one or more channels in a sub-10Ghz wireless communication frequency band, for example, a 2.4GHz wireless communication frequency band, one or more channels in a 5GHz wireless communication frequency band, and/or one or more channels in a 6GHz wireless communication frequency band. In another example, WM 103 may additionally or alternatively include one or more channels in an mmWave wireless communication frequency band. In other aspects, WM 103 may include any other type of channel over any other frequency band.

In some demonstrative aspects, device 102, device 140, and/or device 160 may include one or more radios including circuitry and/or logic to perform wireless communication between devices 102, 140, 160, and/or one or more other wireless communication devices. For example, device 102 may include one or more radios 114, and/or device 140 may include one or more radios 144.

In some demonstrative aspects, radios 114 and/or radios 144 may include one or more wireless receivers (Rx) including circuitry and/or logic to receive wireless communication signals, RF signals, frames, blocks, transmission streams, packets, messages, data items, and/or data. For example, a radio 114 may include at least one receiver 116, and/or a radio 144 may include at least one receiver 146.

In some demonstrative aspects, radios 114 and/or 144 may include one or more wireless transmitters (Tx) including circuitry and/or logic to transmit wireless communication signals, RF signals, frames, blocks, transmission streams, packets, messages, data items, and/or data. For example, a radio 114 may include at least one transmitter 118, and/or a radio 144 may include at least one transmitter 148.

In some demonstrative aspects, radios 114 and/or 144, transmitters 118 and/or 148, and/or receivers 116 and/or 146 may include circuitry; logic; Radio Frequency (RF) elements, circuitry and/or logic; baseband elements, circuitry and/or logic; modulation elements, circuitry and/or logic; demodulation elements, circuitry and/or logic; amplifiers; analog to digital and/or digital to analog converters; filters; and/or the like. For example, radios 114 and/or 144 may include or may be implemented as part of a wireless Network Interface Card (NIC), and the like.

In some demonstrative aspects, radios 114 and/or 144 may be configured to communicate over a 2.4GHz band, a 5GHz band, a 6GHz band, and/or any other band, for example, a directional band, e.g., an mmWave band, a 5G band, an S1G band, and/or any other band.

In some demonstrative aspects, radios 114 and/or 144 may include, or may be associated with one or more antennas.

In some demonstrative aspects, device 102 may include one or more antennas 107, and/or device 140 may include on or more antennas 147.

Antennas 107 and/or 147 may include any type of antennas suitable for transmitting and/or receiving wireless communication signals, blocks, frames, transmission streams, packets, messages and/or data. For example, antennas 107 and/or 147 may include any suitable configuration, structure and/or arrangement of one or more antenna elements, components, units, assemblies and/or arrays. In some aspects, antennas 107 and/or 147 may implement transmit and receive functionalities using separate transmit and receive antenna elements. In some aspects, antennas 107 and/or 147 may implement transmit and receive functionalities using common and/or integrated transmit/receive elements.

In some demonstrative aspects, device 102 may include a controller 124, and/or device 140 may include a controller 154. Controller 124 may be configured to perform and/or to trigger, cause, instruct and/or control device 102 to perform, one or more communications, to generate and/or communicate one or more messages and/or transmissions, and/or to perform one or more functionalities, operations and/or procedures between devices 102, 140, 160 and/or one or more other devices; and/or controller 154 may be configured to perform, and/or to trigger, cause, instruct and/or control device 140 to perform, one or more communications, to generate and/or communicate one or more messages and/or transmissions, and/or to perform one or more functionalities, operations and/or procedures between devices 102, 140, 160 and/or one or more other devices, e.g., as described below.

In some demonstrative aspects, controllers 124 and/or 154 may include, or may be implemented, partially or entirely, by circuitry and/or logic, e.g., one or more processors including circuitry and/or logic, memory circuitry and/or logic, Media-Access Control (MAC) circuitry and/or logic, Physical Layer (PHY) circuitry and/or logic, baseband (BB) circuitry and/or logic, a BB processor, a BB memory, Application Processor (AP) circuitry and/or logic, an AP processor, an AP memory, and/or any other circuitry and/or logic, configured to perform the functionality of controllers 124 and/or 154, respectively. Additionally or alternatively, one or more functionalities of controllers 124 and/or 154 may be implemented by logic, which may be executed by a machine and/or one or more processors, e.g., as described below.

In one example, controller 124 may include circuitry and/or logic, for example, one or more processors including circuitry and/or logic, to cause, trigger and/or control a wireless device, e.g., device 102, and/or a wireless station, e.g., a wireless STA implemented by device 102, to perform one or more operations, communications and/or functionalities, e.g., as described herein. In one example, controller 124 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In one example, controller 154 may include circuitry and/or logic, for example, one or more processors including circuitry and/or logic, to cause, trigger and/or control a wireless device, e.g., device 140, and/or a wireless station, e.g., a wireless STA implemented by device 140, to perform one or more operations, communications and/or functionalities, e.g., as described herein. In one example, controller 154 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In some demonstrative aspects, at least part of the functionality of controller 124 may be implemented as part of one or more elements of radio 114, and/or at least part of the functionality of controller 154 may be implemented as part of one or more elements of radio 144.

In other aspects, the functionality of controller 124 may be implemented as part of any other element of device 102, and/or the functionality of controller 154 may be implemented as part of any other element of device 140.

In some demonstrative aspects, device 102 may include a message processor 128 configured to generate, process and/or access one or messages communicated by device 102.

In one example, message processor 128 may be configured to generate one or more messages to be transmitted by device 102, and/or message processor 128 may be configured to access and/or to process one or more messages received by device 102, e.g., as described below.

In one example, message processor 128 may include at least one first component configured to generate a message, for example, in the form of a frame, field, information element and/or protocol data unit, for example, a MAC Protocol Data Unit (MPDU); at least one second component configured to convert the message into a PHY Protocol Data Unit (PPDU), for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 128 may be configured to perform any other additional or alternative functionality and/or may include any other additional or alternative components to generate and/or process a message to be transmitted.

In some demonstrative aspects, device 140 may include a message processor 158 configured to generate, process and/or access one or more messages communicated by device 140.

In one example, message processor 158 may be configured to generate one or more messages to be transmitted by device 140, and/or message processor 158 may be configured to access and/or to process one or more messages received by device 140, e.g., as described below.

In one example, message processor 158 may include at least one first component configured to generate a message, for example, in the form of a frame, field, information element and/or protocol data unit, for example, an MPDU; at least one second component configured to convert the message into a PPDU, for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 158 may be configured to perform any other additional or alternative functionality and/or may include any other additional or alternative components to generate and/or process a message to be transmitted.

In some demonstrative aspects, message processors 128 and/or 158 may include, or may be implemented, partially or entirely, by circuitry and/or logic, e.g., one or more processors including circuitry and/or logic, memory circuitry and/or logic, MAC circuitry and/or logic, PHY circuitry and/or logic, BB circuitry and/or logic, a BB processor, a BB memory, AP circuitry and/or logic, an AP processor, an AP memory, and/or any other circuitry and/or logic, configured to perform the functionality of message processors 128 and/or 158, respectively. Additionally or alternatively, one or more functionalities of message processors 128 and/or 158 may be implemented by logic, which may be executed by a machine and/or one or more processors, e.g., as described below.

In some demonstrative aspects, at least part of the functionality of message processor 128 may be implemented as part of radio 114, and/or at least part of the functionality of message processor 158 may be implemented as part of radio 144.

In some demonstrative aspects, at least part of the functionality of message processor 128 may be implemented as part of controller 124, and/or at least part of the functionality of message processor 158 may be implemented as part of controller 154.

In other aspects, the functionality of message processor 128 may be implemented as part of any other element of device 102, and/or the functionality of message processor 158 may be implemented as part of any other element of device 140.

In some demonstrative aspects, at least part of the functionality of controller 124 and/or message processor 128 may be implemented by an integrated circuit, for example, a chip, e.g., a System on Chip (SoC). In one example, the chip or SoC may be configured to perform one or more functionalities of one or more radios 114. For example, the chip or SoC may include one or more elements of controller 124, one or more elements of message processor 128, and/or one or more elements of one or more radios 114. In one example, controller 124, message processor 128, and one or more radios 114 may be implemented as part of the chip or SoC.

In other aspects, controller 124, message processor 128 and/or one or more radios 114 may be implemented by one or more additional or alternative elements of device 102.

In some demonstrative aspects, at least part of the functionality of controller 154 and/or message processor 158 may be implemented by an integrated circuit, for example, a chip, e.g., a SoC. In one example, the chip or SoC may be configured to perform one or more functionalities of one or more radios 144. For example, the chip or SoC may include one or more elements of controller 154, one or more elements of message processor 158, and/or one or more elements of one or more radios 144. In one example, controller 154, message processor 158, and one or more radios 144 may be implemented as part of the chip or SoC.

In other aspects, controller 154, message processor 158 and/or one or more radios 144 may be implemented by one or more additional or alternative elements of device 140.

In some demonstrative aspects, device 102, device 140, and/or device 160 may include, operate as, perform the role of, and/or perform one or more functionalities of, one or more STAs. For example, device 102 may include at least one STA, device 140 may include at least one STA, and/or device 160 may include at least one STA.

In some demonstrative aspects, device 102, device 140, and/or device 160 may include, operate as, perform the role of, and/or perform one or more functionalities of, one or more Extremely High Throughput (EHT) STAs. For example, device 102 may include, operate as, perform the role of, and/or perform one or more functionalities of, one or more EHT STAs, and/or device 140 may include, operate as, perform the role of, and/or perform one or more functionalities of, one or more EHT STAs.

In some demonstrative aspects, for example, device 102, device 140, and/or device 160 may be configured to perform one or more operations, and/or functionalities of a WiFi 8 STA.

In other aspects, for example, devices 102, 140 and/or 160 may be configured to perform one or more operations, and/or functionalities of an Ultra High Reliability (UHR) STA.

In other aspects, for example, devices 102, 140, and/or 160 may be configured to perform one or more operations, and/or functionalities of any other additional or alternative type of STA.

In other aspects, device 102, device 140, and/or device 160 may include, operate as, perform the role of, and/or perform one or more functionalities of, any other wireless device and/or station, e.g., a WLAN STA, a WiFi STA, and the like.

In some demonstrative aspects, device 102, device 140, and/or device 160 may be configured operate as, perform the role of, and/or perform one or more functionalities of, an Access Point (AP), e.g., a High Throughput (HT) AP STA, a High Efficiency (HE) AP STA, an EHT AP STA and/or a UHR AP STA.

In some demonstrative aspects, device 102, device 140, and/or device 160 may be configured to operate as, perform the role of, and/or perform one or more functionalities of, a non-AP STA, e.g., an HT non-AP STA, an HE non-AP STA, an EHT non-AP STA and/or a UHR non-AP STA.

In other aspects, device 102, device 140, and/or device 160 may operate as, perform the role of, and/or perform one or more functionalities of, any other additional or alternative device and/or station.

In one example, a station (STA) may include a logical entity that is a singly addressable instance of a medium access control (MAC) and physical layer (PHY) interface to the wireless medium (WM). The STA may perform any other additional or alternative functionality.

In one example, an AP may include an entity that contains one station (STA) and provides access to the distribution services, via the wireless medium (WM) for associated STAs. An AP may include a STA and a distribution system access function (DSAF). The AP may perform any other additional or alternative functionality.

In some demonstrative aspects devices 102, 140, and/or 160 may be configured to communicate in an HT network, an HE network, an EHT network, a UHR network, and/or any other network.

In some demonstrative aspects, devices 102, 140 and/or 160 may be configured to operate in accordance with one or more Specifications, for example, including one or more *IEEE 802.11 Specifications,* e.g., an *IEEE 802.11-2020 Specification, an IEEE 802.11ax Specification,* and/or any other specification and/or protocol.

In some demonstrative aspects, device 102 may include, operate as, perform a role of, and/or perform the functionality of, an AP STA.

In some demonstrative aspects, device 140, and/or device 160 may include, operate as, perform a role of, and/or perform the functionality of, one or more non-AP STAs. For example, device 140 may include, operate as, perform a role of, and/or perform the functionality of, at least one non-AP STA, and/or device 160 may include, operate as, perform a role of, and/or perform the functionality of, at least one non-AP STA.

In some demonstrative aspects, device 102, device 140, and/or device 160 may be configured to communicate according to a resource allocation mechanism, which may assign a Resource Unit (RU) or a multiple Resource Unit (MRU) to a user (also referred to as "user STA"), e.g., as described below.

In some demonstrative aspects, device 102, device 140, and/or device 160 may be configured to communicate according to a resource allocation mechanism, which may support assignment of a RU/MRU to a user utilizing the same, e.g., equal, modulation and coding scheme (MCS), e.g., as described below.

In some demonstrative aspects, device 102, device 140, and/or device 160 may be configured to communicate according to a resource allocation mechanism, which may support assignment of a RU/MRU to a user utilizing a plurality of different, e.g., unequal, MCSs, e.g., as described below.

In some demonstrative aspects, for example, in some implementations, scenarios, use cases, and/or deployments, there may be one or more technical issues in implementations, which assign an RU or an MRU to a user utilizing the same MCS, e.g., across the entire RU/MRU assigned to the user.

For example, utilizing the same MCS for the entire assigned RU/MRU may result in low throughput, for example, when the RU assigned to the user is across a primary channel and secondary channels.

For example, utilizing the same MCS for the entire assigned RU/MRU may result in low throughput, for example, as a primary channel and a secondary channel may adopt different clear channel assessment (CCA) methods, signal detect CCA and/or energy detect CCA, which may have different sensitivities with respect to the different channels. For example, on a 20MHz primary channel and a 20MHz secondary channel, the sensitivity thresholds may be -82 decibel-milliwatts (dBm) (signal detect CCA) and/or -62 dBm (energy detect CCA), respectively. For example, adopting different CCA methods for primary and secondary channels may result in significant signal-to-noise ratio (SNR) imbalance between the primary and secondary channels.

In some demonstrative aspects, device 102, device 140, and/or device 160 may be configured to implement an MCS allocation scheme (also referred to as an "unequal MCS allocation scheme"), which may be configured to assign a plurality of MCSs, e.g., including two or more different MCSs, to a plurality of different segments of an RU/MRU, e.g., as described below.

In some demonstrative aspects, the unequal MCS allocation scheme may be configured to provide a technical solution to support assignment of different MCSs to different segments of an RU/MRU, for example, when these segments have considerable variations on SNR, for example, in order to fit to their SNR conditions and/or to achieve high throughput, e.g., as described below.

In some demonstrative aspects, the unequal MCS allocation scheme may be configured to provide a technical solution to support allocation of unequal MCS over spatial streams, e.g., as described below.

For example, the unequal MCS over spatial streams may be configured to provide a technical solution to support Multiple-Input-Multiple-Output (MIMO), for example, where MIMO gains are different on different spatial streams, thereby causing various SNR conditions.

In some demonstrative aspects, the unequal MCS allocation scheme may be configured to provide a technical solution to support assignment of unequal MCS over a plurality of frequency sub-channels, e.g., as described below.

In some demonstrative aspects, the unequal MCS allocation scheme may be configured to provide a technical solution to support assignment of unequal MCS over a plurality of spatial streams, e.g., as described below.

In some demonstrative aspects, the unequal MCS allocation scheme may be configured to provide a technical solution to support assignment of unequal MCS over both a plurality of frequency sub-channels and a plurality of spatial streams, e.g., as described below.

In some demonstrative aspects, the unequal MCS allocation scheme may be configured to support unequal MCS over a plurality of frequency channels, over a plurality of spatial streams, and/or over both frequency channels and spatial streams, for example, in downlink (DL) transmissions, e.g., as described below.

In some demonstrative aspects, the unequal MCS allocation scheme may include applying unequal MCSs, for example, when a relatively large RU/MRU and/or an RU/MRU across primary and secondary channels is assigned to a user. For example, the relatively large RU/MRU may be split into multiple sub-RU/MRUs and MCSs may be assigned to some or all of the sub-RU/MRUs, e.g., to each of the sub-RU/MRUs, for example, based on an SNR level of the one or more sub-RU/MRUs. For example, for a 40MHz RU, two MCSs may be assigned to two 20MHz sub-RUs, for example, according to an SNR level of the sub-RU/MRUs.

In some demonstrative aspects, MIMO gains may be different, e.g., considerably different, on different spatial streams, for example, when MIMO techniques are applied.

In some demonstrative aspects, there may be a need to provide a technical solution to support signaling of the unequal MCS assignment. For example, some signaling fields, such as an EHT Signal (SIG) EHT-SIG defined in accordance with an *IEEE 802.11be Specification* may only support an assignment of a single MCS for each user.

In some demonstrative aspects, an unequal MCS allocation scheme may be configured to provide a technical solution to support signaling of an unequal MCS assignment over the plurality of frequency sub-channels and/or spatial streams, e.g., as described below.

In some demonstrative aspects, device 102, device 140, and/or device 160 may be configured to implement an unequal MCS signaling mechanism, which may be configured to support signaling of an unequal MCS assignment over a plurality of frequency sub-channels and/or spatial streams, e.g., as described below.

In some demonstrative aspects, the unequal MCS signaling mechanism may be configured to implement a technical solution configured to support utilizing an unequal MCS over a plurality of frequency sub-channels and/or over a plurality of both frequency sub-channels and spatial streams, for example, in accordance with an *IEEE 802.11 Specification*, e.g., as described below.

In some demonstrative aspects, the unequal MCS signaling mechanism may utilize one or more user-specific fields for unequal MCS over a plurality of frequency sub-channels, for example, in case MIMO is not applied, e.g., as described below.

In some demonstrative aspects, the unequal MCS signaling mechanism may utilize one or more user-specific fields, e.g. according to a new user-specific field format, which may be configured to enable unequal MCS over both frequency sub-channels and spatial streams, for example, in case MIMO is applied, e.g., as described below.

In some demonstrative aspects, controller 124 may be configured to control, trigger, cause, and/or instruct an AP implemented by device 102 to set RU allocation information in a SIG field, e.g., as described below.

In some demonstrative aspects, the RU allocation information may be configured to indicate an RU allocation for a user (also referred to as "user STA"), e.g., as described below.

In some demonstrative aspects, the user may include a user (also referred "unequal MCS user" or "UEM user"), which is capable of supporting unequal MCS assignments, as described below.

In some demonstrative aspects, controller 124 may be configured to control, trigger, cause, and/or instruct the AP implemented by device 102 to set unequal MCS (UEM) information for the user (UEM user) in the SIG field, e.g., as described below.

In some demonstrative aspects, the UEM information for the user may be configured to indicate an assignment of a plurality of MCSs to a plurality of frequency sub-channels in the RU allocation for the user, respectively, e.g., as described below.

In some demonstrative aspects, controller 124 may be configured to control, trigger, cause, and/or instruct the AP implemented by device 102 to transmit a DL PPDU including the SIG field and a data field for the user (UEM user), e.g., as described below.

In some demonstrative aspects, the data field for the UEM user may be configured, for example, according to the assignment of the plurality of MCSs to the plurality of frequency sub-channels in the RU allocation for the UEM user, e.g., as described below.

In some demonstrative aspects, the SIG field may include an EHT-SIG field.

In other aspects, the SIG field may include any other type of field.

In some demonstrative aspects, the DL PPDU may include an MU PPDU for a plurality of users including the UEM user, e.g., as described below.

In some demonstrative aspects, the DL PPDU may include an SU PPDU for the UEM user, e.g., as described below.

In some demonstrative aspects, the DL PPDU may include an EHT DL PPDU, e.g., as described below.

In some demonstrative aspects, the DL PPDU may include an UHR DL PPDU, e.g., as described below.

In other aspects, the DL PPDU may include any other type of PPDU.

In some demonstrative aspects, controller 124 may be configured to control, trigger, cause, and/or instruct the AP implemented by device 102 to set a user field for the user and at least one LTEM field for the user in the SIG field, e.g., as described below.

In some demonstrative aspects, the user field for the user may be configured to indicate that the user is a UEM user, which has a LTEM assignment, e.g., as described below.

In some demonstrative aspects, the at least one UEM field for the UEM user may be configured to include the LTEM information for the UEM user, e.g., as described below.

In some demonstrative aspects, controller 124 may be configured to control, trigger, cause, and/or instruct the AP implemented by device 102 to set a predefined MCS type value in an MCS type subfield in the user field for the user, e.g., as described below.

In some demonstrative aspects, the predefined MCS type value may be configured to indicate that the user is a UEM user, which has the LTEM assignment, e.g., as described below.

In some demonstrative aspects, the predefined MCS type value may be configured to indicate a type of the UEM assignment from a plurality of predefined UEM assignment types, e.g., as described below.

In some demonstrative aspects, the plurality of predefined UEM assignment types may include at least one of a UEM assignment over frequency sub-channels, a UEM assignment over spatial streams, or a UEM assignment over both frequency sub-channels and spatial streams, e.g., as described below.

In other aspects, the plurality of predefined UEM assignment types may include any other additional or alternative UEM assignment types.

In some demonstrative aspects, the MCS type subfield may have a size of 2 bits.

In other aspects, the MCS type subfield may have any other size.

In some demonstrative aspects, controller 124 may be configured to control, trigger, cause, and/or instruct the AP implemented by device 102 to set a UEM field indicator subfield in the user field for the user, e.g., as described below.

In some demonstrative aspects, the UEM field indicator subfield may be configured to indicate a position of a first UEM field of the at least one UEM field for the user in the SIG field, e.g., as described below.

In some demonstrative aspects, the at least one UEM field for the user may be configured, for example, according to a LTEM field format, which includes a plurality of MCS subfields, e.g., as described below.

In some demonstrative aspects, a first-in-order UEM field of the at least one UEM field for the user may include a frequency segment subfield configured to indicate a segmentation of the RU allocation for the user into the plurality of frequency sub-channels, e.g., as described below.

In some demonstrative aspects, controller 124 may be configured to control, trigger, cause, and/or instruct the AP implemented by device 102 to set a spatial configuration subfield in the user field for the user to indicate an assignment of a plurality of spatial streams for the user, e.g., as described below.

In some demonstrative aspects, the UEM information for the user may be configured to indicate an assignment of the plurality of MCSs to the plurality of spatial streams over the plurality of frequency sub-channels, e.g., as described below.

In some demonstrative aspects, the at least one UEM field for the user may include a plurality of LTEM fields for the user, e.g., as described below.

In some demonstrative aspects, a UEM field of the plurality of UEM fields for the user may include frequency-channel specific UEM information corresponding to a frequency sub-channel of the plurality of frequency sub-channels, e.g., as described below.

In some demonstrative aspects, the frequency-channel specific UEM information may include a plurality of frequency-channel specific MCSs for the plurality of spatial streams over the frequency sub-channel, e.g., as described below.

In some demonstrative aspects, the at least one UEM field for the user may include at least a first LTEM field and a second UEM field, e.g., as described below.

In some demonstrative aspects, the first UEM field may include a first plurality of MCSs for the plurality of spatial streams over a first frequency sub-channel, e.g., as described below.

In some demonstrative aspects, the second UEM field may include a second plurality of MCSs for the plurality of spatial streams over a second frequency sub-channel, e.g., as described below.

In some demonstrative aspects, controller 124 may be configured to control, trigger, cause, and/or instruct the AP implemented by device 102 to set a predefined MCS index in an MCS subfield in the user field for the user, e.g., as described below.

In some demonstrative aspects, the predefined MCS index may be configured to indicate that the user is a UEM user, which has the LTEM assignment, e.g., as described below.

In some demonstrative aspects, the predefined MCS index may include an MCS index 14.

In other aspects, the predefined MCS index may include any other MCS index.

In some demonstrative aspects, the at least one UEM field for the user may be configured, for example, according to a UEM field format, e.g., as described below.

In some demonstrative aspects, the UEM field format may be configured to include a STA identifier (ID) (STA-ID) field to identify the user, and a plurality of MCS subfields after the STA-ID field, e.g., as described below.

In some demonstrative aspects, controller 124 may be configured to control, trigger, cause, and/or instruct the AP implemented by device 102 to set a spatial configuration subfield in the user field for the user, for example, to indicate an assignment of a plurality of spatial streams for the user, e.g., as described below.

In some demonstrative aspects, the UEM information for the user may be configured to indicate an assignment of the plurality of MCSs to the plurality of spatial streams over the plurality of frequency sub-channels, e.g., as described below.

In some demonstrative aspects, controller 124 may be configured to control, trigger, cause, and/or instruct the AP implemented by device 102 to encode the at least one UEM field for the user into one or more UEM encoding blocks, for example, according to a UEM encoding block format, e.g., as described below.

In some demonstrative aspects, the UEM encoding block format may be configured to include a UEM encoding block including two UEM fields, e.g., as described below.

In some demonstrative aspects, the UEM encoding block format may be configured to include a Cyclic Redundancy Check (CRC) field, for example, based on the two UEM fields, e.g., as described below.

In some demonstrative aspects, the at least one UEM field for the user may be located after all user fields in the SIG field, e.g., as described below.

In other aspects, the at least one UEM field for the user may be located at any other location in the SIG field.

In some demonstrative aspects, controller 124 may be configured to control, trigger, cause, and/or instruct the AP implemented by device 102 to set the UEM information for the user in a plurality of user-fields for the user in the SIG field, e.g., as described below.

In some demonstrative aspects, the plurality of user-fields for the user may be configured to indicate the plurality of MCSs, respectively, of the unequal MCS assignment, e.g., as described below.

In some demonstrative aspects, a user-field of the plurality of user-fields for the user may include a STA-ID field, which includes a STA-ID to identify the user, and an MCS field including an MCS of the plurality of MCSs, e.g., as described below.

In some demonstrative aspects, each of the plurality of user-fields for the user may include a same STA-ID to identify the user, e.g., as described below.

In some demonstrative aspects, controller 124 may be configured to control, trigger, cause, and/or instruct the AP implemented by device 102 to set the RU allocation information to indicate an allocation of a plurality of sub-RUs for the user, e.g., as described below.

In some demonstrative aspects, the plurality of sub-RUs for the user may be configured to include the plurality of frequency sub-channels, respectively, e.g., as described below.

In some demonstrative aspects, controller 124 may be configured to control, trigger, cause, and/or instruct the AP implemented by device 102 to set the plurality of user-fields for the user to indicate the plurality of MCSs, for example, according to an order of the plurality of frequency sub-channels in the RU allocation for the user, e.g., as described below.

In some demonstrative aspects, a first-in-order user-field of the plurality of user-fields for the user may include a STA-ID field, an MCS field after the STA-ID field, and a spatial configuration field after the MCS field, e.g., as described below.

In some demonstrative aspects, a non-first-in-order user-field of the plurality of user-fields for the user may include one or more MCS fields, for example, while excluding the STA-ID field, e.g., as described below.

In some demonstrative aspects, a bit size of a user-field of the plurality of user-fields for the user may be equal to a predefined bit size of a user field for a user (also referred to as "non-UEM user") with a single MCS assignment, e.g., as described below.

In some demonstrative aspects, a user-field of the plurality of user-fields for the user may have a bit size of 22 bits.

In other aspects, the user-field for the user may have any other bit size.

In some demonstrative aspects, controller 154 may be configured to control, trigger, cause, and/or instruct a user STA implemented by device 140 to identify an RU allocation for the user STA, for example, based on RU allocation information in a SIG field of a DL PPDU received by the user STA implemented by device 140, e.g., as described below.

In some demonstrative aspects, the received DL PPDU may include the DL PPDU transmitted by the AP, e.g., the AP implemented by device 102.

In some demonstrative aspects, controller 154 may be configured to control, trigger, cause, and/or instruct the user STA implemented by device 140 to process UEM information for the user STA in the SIG field, for example, to identify an assignment of a plurality of MCSs to a plurality of frequency sub-channels in the RU allocation for the user STA, respectively, e.g., as described below.

In some demonstrative aspects, controller 154 may be configured to control, trigger, cause, and/or instruct the user STA implemented by device 140 to process a data field for the user STA in the DL PPDU, for example, based on the assignment of the plurality of MCSs to the plurality of frequency sub-channels in the RU allocation for the user STA, e.g., as described below.

In some demonstrative aspects, controller 154 may be configured to control, trigger, cause, and/or instruct the user STA implemented by device 140 to identify a user field for the user STA and at least one UEM field for the user STA in the SIG field, e.g., as described below.

In some demonstrative aspects, the user field for the user STA may be configured to indicate that the user STA is a UEM user STA, which has a UEM assignment, e.g., as described below.

In some demonstrative aspects, the at least one UEM field for the user STA may include the UEM information for the user STA, e.g., as described below.

In some demonstrative aspects, controller 154 may be configured to control, trigger, cause, and/or instruct the user STA implemented by device 140 to identify a predefined MCS type value in an MCS type subfield in the user field for the user STA, e.g., as described below.

In some demonstrative aspects, the predefined MCS type value may indicate that the user STA is a LTEM user STA, which has the LTEM assignment, e.g., as described below.

In some demonstrative aspects, the predefined MCS type value may be configured to indicate a type of the UEM assignment from a plurality of predefined UEM assignment types, e.g., as described below.

In some demonstrative aspects, the plurality of predefined UEM assignment types may include at least one of a UEM assignment over frequency sub-channels, a UEM assignment over spatial streams, or a UEM assignment over both frequency sub-channels and spatial streams, e.g., as described below.

In some demonstrative aspects, the MCS type subfield may have a size of 2 bits.

In other aspects, the MCS type subfield may have any other size.

In some demonstrative aspects, controller 154 may be configured to control, trigger, cause, and/or instruct the user STA implemented by device 140 to identify a UEM field indicator subfield in the user field for the user STA, e.g., as described below.

In some demonstrative aspects, controller 154 may be configured to control, trigger, cause, and/or instruct the user STA implemented by device 140 to identify, e.g., based on the UEM field indicator subfield, a position of a first UEM field of the at least one UEM field for the user STA in the SIG field, e.g., as described below.

In some demonstrative aspects, the at least one UEM field for the user STA may be configured, for example, according to a UEM field format including a plurality of MCS subfields, e.g., as described below.

In some demonstrative aspects, a first-in-order UEM field of the at least one UEM field for the user STA may include a frequency segment subfield configured to indicate a segmentation of the RU allocation for the user STA into the plurality of frequency sub-channels, e.g., as described below.

In some demonstrative aspects, controller 154 may be configured to control, trigger, cause, and/or instruct the user STA implemented by device 140 to identify a spatial configuration subfield in the user field for the user STA.

In some demonstrative aspects, the spatial configuration subfield in the user field for the user STA may be configured to indicate an assignment of a plurality of spatial streams for the user STA, e.g., as described below.

In some demonstrative aspects, the UEM information for the user STA may be configured to indicate an assignment of the plurality of MCSs to the plurality of spatial streams over the plurality of frequency sub-channels, e.g., as described below.

In some demonstrative aspects, the at least one UEM field for the user STA may include a plurality of UEM fields for the user STA, e.g., as described below.

In some demonstrative aspects, a UEM field of the plurality of UEM fields for the user STA may include frequency-channel specific UEM information corresponding to a frequency sub-channel of the plurality of frequency sub-channels, e.g., as described below.

In some demonstrative aspects, the frequency-channel specific UEM information may include a plurality of frequency-channel specific MCSs for the plurality of spatial streams over the frequency sub-channel, e.g., as described below.

In some demonstrative aspects, the at least one UEM field for the user STA may include a first UEM field and a second UEM field, e.g., as described below.

In some demonstrative aspects, the first UEM field may include a first plurality of MCSs for the plurality of spatial streams over a first frequency sub-channel, and the second UEM field may include a second plurality of MCSs for the plurality of spatial streams over a second frequency sub-channel, e.g., as described below.

In some demonstrative aspects, controller 154 may be configured to control, trigger, cause, and/or instruct the user STA implemented by device 140 to identify a predefined MCS index in an MCS subfield in the user field for the user STA, and, based on the predefined MCS index to identify that the user STA has the UEM assignment, e.g., as described below.

In some demonstrative aspects, the predefined MCS index may be 14.

In other aspects, the predefined MCS index may include any other MCS index.

In some demonstrative aspects, the at least one UEM field for the user STA may be configured, for example, according to a UEM field format including a STA-ID field to identify the user STA, and a plurality of MCS subfields after the STA-ID field, e.g., as described below.

In some demonstrative aspects, controller 154 may be configured to control, trigger, cause, and/or instruct the user STA implemented by device 140 to identify an assignment of a plurality of spatial streams for the user STA, for example, based on a spatial configuration subfield in the user field for the user STA, e.g., as described below.

In some demonstrative aspects, controller 154 may be configured to control, trigger, cause, and/or instruct the user STA implemented by device 140 to identify, e.g., based on the UEM information for the user STA, an assignment of the plurality of MCSs to the plurality of spatial streams over the plurality of frequency sub-channels, e.g., as described below.

In some demonstrative aspects, controller 154 may be configured to control, trigger, cause, and/or instruct the user STA implemented by device 140 to identify the at least one UEM field for the user STA by processing one or more UEM encoding blocks, for example, according to a UEM encoding block format, which includes a UEM encoding block including two UEM fields, and a CRC field based on the two UEM fields, e.g., as described below.

In some demonstrative aspects, controller 154 may be configured to control, trigger, cause, and/or instruct the user STA implemented by device 140 to identify the at least one UEM field for the user STA located after all user fields in the SIG field, e.g., as described below.

In some demonstrative aspects, controller 154 may be configured to control, trigger, cause, and/or instruct the user STA implemented by device 140 to identify the UEM information for the user STA in a plurality of user-fields for the user STA in the SIG field. For example, the plurality of user-fields for the user STA may be configured to indicate the plurality of MCSs, respectively, e.g., as described below.

In some demonstrative aspects, a user-field of the plurality of user-fields for the user STA may include a STA-ID field including a STA-ID to identify the user STA, and an MCS field including an MCS of the plurality of MCSs, e.g., as described below.

In some demonstrative aspects, each of the plurality of user-fields for the user STA may include a same STA-ID to identify the user STA, e.g., as described below.

In some demonstrative aspects, controller 154 may be configured to control, trigger, cause, and/or instruct the user STA implemented by device 140 to identify the RU allocation information to indicate an allocation of a plurality of sub-RUs for the user STA, e.g., as described below.

In some demonstrative aspects, the plurality of sub-RUs for the user STA may include the plurality of frequency sub-channels, respectively, e.g., as described below.

In some demonstrative aspects, controller 154 may be configured to control, trigger, cause, and/or instruct the user STA implemented by device 140 to identify the plurality of user-fields for the user STA to indicate the plurality of MCSs, for example, according to an order of the plurality of frequency sub-channels in the RU allocation for the user STA, e.g., as described below.

In some demonstrative aspects, a first-in-order user-field of the plurality of user-fields for the user STA may include a STA-ID field, an MCS field after the STA-ID field, and/or a spatial configuration field after the MCS field, e.g., as described below.

In some demonstrative aspects, a bit size of a user-field of the plurality of user-fields for the user STA may be equal to a predefined bit size of a user field for a user with a single MCS assignment, e.g., as described below.

In some demonstrative aspects, a user-field of the plurality of user-fields for the user STA may have a bit size of 22 bits.

In some demonstrative aspects, a user-field of the plurality of user-fields for the user STA may have any other bit size.

In some demonstrative aspects, device 102, device 140, and/or device 160 may be configured to implement an unequal MCS signaling mechanism, which may be configured to provide a technical solution to support allocation of unequal MCSs over a plurality of frequency sub-channels, e.g., as described below.

In some demonstrative aspects, the unequal MCS signaling mechanism may provide a technical solution to support delivering information corresponding to a plurality of MCSs to a plurality of users, e.g., as described below.

In some demonstrative aspects, the unequal MCS signaling mechanism may provide a technical solution to support notifying a user of the plurality of users of an assignment of its sub-RU/MRUs, which may be split from an RU/MRU corresponding to the user, e.g., as described below.

In some demonstrative aspects, device 102, device 140, and/or device 160 may be configured to implement the unequal MCS signaling mechanism configured to utilize a user-specific field in a signaling field, e.g., in compliance with a *IEEE 802.11be Specification,* e.g., as described below.

In some demonstrative aspects, the unequal MCS signaling mechanism may be configured to utilize a fake user-based user-specific field in a signaling field to support allocation of unequal MCS over the plurality of frequency sub-channels, e.g., as described below.

In some demonstrative aspects, the unequal MCS signaling mechanism may be configured to define one or more "fake" users to support signaling of unequal MCS over the plurality of frequency sub-channels, e.g., as described below.

In some demonstrative aspects, the unequal MCS signaling mechanism may be configured to support a UEM assignment for a UEM user over a plurality frequency sub-channels, for example, by split an RU/MRU of the user into *M* sub-RU/MRUs with *M* MCSs, e.g., as described below.

For example, the user with *M* sub-RU/MRUs may be regarded as *M* users, e.g., including *M-1* "fake" users, in a user-specific field of the EHT-SIG field, e.g., as described below.

In some demonstrative aspects, it may be defined that a user's RU/MRU is split into *M* sub-RU/MRUs, for example, if the user utilizes unequal MCS over *M* frequency sub-channels, e.g., as described below. For example, one or more of the sub-RU/MRUs, e.g., each sub-RU/MRU, may be assigned with an MCS, for example, based on an SNR level of the sub-RU/MRU and/or based on any other additional or alternative criteria. For example, a total of up to *M* different MCSs may be assigned to the *M* sub-RU/MRUs for the user.

In some demonstrative aspects, an assignment of a RU/MRU may include an assignment of a size and placement of sub-RU/MRUs for the RU/MRU.

In some demonstrative aspects, the assignment of the sub-RU/MRU may be, e.g., may need to be, adjusted in RU allocation subfields of a common field of the EHT-SIG field, for example, where one or more sub-RU/MRUs, e.g., each sub-RU/MRU, may be considered as an individual RU/MRU.

For example, the assignment of the sub-RU/MRUs may include generating corresponding bits in an RU allocation subfield, for example, to indicate the allocation of the sub-RU/MRUs, e.g., as "fake" RU/MRU allocations to a respective plurality of "fake" users.

For example, a user may identify the assignment of the one or more of sub-RU/MRUs for the user, for example, after reading the common field in the EHT-SIG field.

In some demonstrative aspects, a plurality of sub-RU/MRUs may be, e.g., may need to be, deemed as a plurality of RU/MRUs in the RU allocation subfields of the common field in the EHT-SIG field.

In one example, a UEM user STA may be allocated with a 52-tone RU, which may be split into two 26-tone sub-RUs, e.g., which may be assigned with respective MCSs. According to this example, the RU allocation for the UEM user STA may be represented by two "fake" 26-tone RU allocations, e.g., instead of a single 52-tone RU.

For example, an RU allocation indicated by a common field of the EHT-SIG field may be adjusted based on the allocation of the two 26-tone sub-RUs to the UEM user, e.g., as follows:

**Table 1**

| RU Allocation subfield (B8 B7 B6 B5 B4 B3 B2 B1 B0) | 1 | 2 | 3 | 4 | 5 | 6 | 7 | 8 | 9 |
|---|---|---|---|---|---|---|---|---|---|
| 5 (000000101) | 26 | 26 | **52** | | 26 | 26 | 26 | 52 | |
| 1 (000000001) | 26 | 26 | **26** | **26** | 26 | 26 | 26 | 52 | |

For example, as shown in Table 1, an RU allocation subfield, e.g., in a common field of an EHT-SIG field, may be set to an RU allocation value configured to indicate a plurality of RU allocations for a plurality of users.

For example, an RU, e.g., a 3^{rd} RU, with 52 subcarriers may be assigned to a third user ("user 3"), e.g., a user which may be third in order of the RU allocations.

For example, as shown in the first line of Table 1, in case the RU allocation for the 3^{rd} user is a non-UEM allocation, an RU allocation subfield may be set to indicate the RU allocation value 5 (000000101), which indicates that the user 3 is allocated with a 52-tone RU.

For example, as shown in the second line of Table 1, in case the RU allocation for the 3^{rd} user is a UEM allocation over two 26-tone sub-frequency channels, the RU allocation subfield may be set to indicate the RU allocation value 1 (000000001), which indicates that a 26-tone RU is allocated to a 3^{rd} user and another, subsequent, 26-RU tone is allocated to a 4^{th} user, e.g., a fake user.

For example, in case of unequal MCS allocation over frequency channels for the 3^{rd} user, the RU/MRU with 52 subcarriers may be split into two sub-RU/MRUs with 26 subcarriers each. As a result, the two sub-RU/MRUs may be, e.g., should be, regarded as two RU/MRUs with 26 subcarriers in the RU allocation subfield, and bits in the RU allocation subfield may be, e.g., should be, changed to represent the value of 1 (00000001).

For example, a user receiving a DL PPDU may identify the assignment of the one or more of sub-RU/MRUs for the user, for example, after reading the RU allocation subfields in the common field in the EHT-SIG field.

For example, the user may scan, e.g., blindly scan, all the user fields in the user-specific field of the EHT-SIG to find its user fields, e.g., by identifying the user fields having a STA-ID of the user.

For example, a UEM user may be aware of the order and places of all its *M* user fields, e.g., according to the ordered places of its *M* sub-RU/MRUs.

For example, the user's *M* user fields may provide MMCSs in MCS subfields of user fields, indicating MCSs of its *M* sub-RU/MRUs.

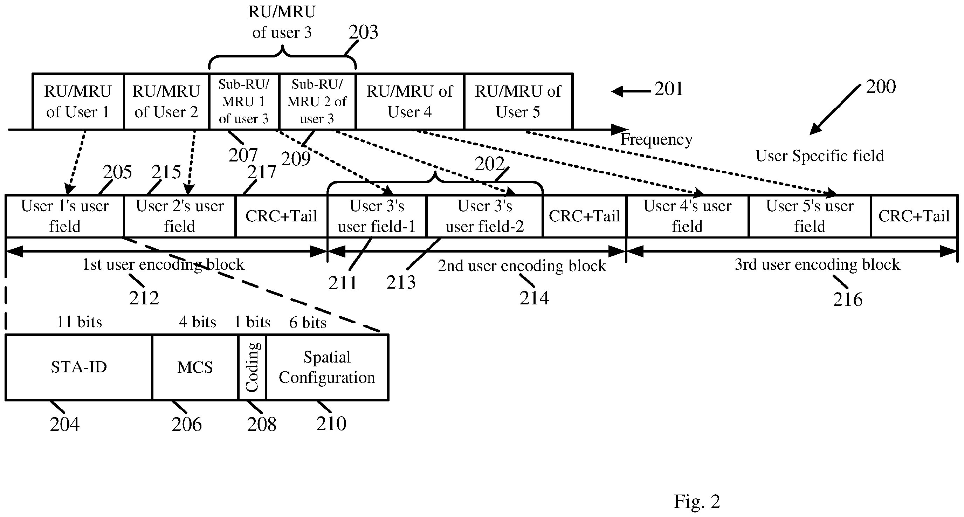

Reference is made to Fig. 2, which schematically illustrates a user-specific field 200, in accordance with some demonstrative aspects.

For example, device 102 (Fig. 1) may be configured to generate, transmit, receive and/or process a frame including a SIG field, which may be configured to include user-specific field 200 to provide user-specific information corresponding to an RU/MRU allocation 201 for one or more users.

For example, device 140 (Fig. 1) and/or device 160 (Fig. 1) may include, operate as, perform a role of, and/or perform the functionality of the one or more users.

In some demonstrative aspects, an AP, e.g., an AP implemented by device 102 (Fig. 1), may determine an RU/MRU assignment, including a size of RU/MRU, RU/MRU placement, and/or RU/MRU allocation to the one or more users.

For example, the AP may transmit information of the RU/MRU size and/or RU/MRU placement, for example, through RU allocation subfields of a common filed in a SIG field, e.g., an EHT-SIG field, of a DL PPDU, e.g., in accordance with the *IEEE 802.11be Specification* and/or any other specification and/or protocol.

For example, the AP may set user fields in a user-specific field of the EHT-SIG field to provide information of the order of RU allocations, which may be according to the order of user fields, e.g., in accordance with the *IEEE 802.11be Specification.*

In some demonstrative aspects, as shown in Fig. 2, a plurality of RUs/MRUs 201, e.g., including 5 RUs/MRUs may be assigned to a plurality of users, e.g., 5 users. For example, each of RUs/MRUs 201 may be assigned to a user.

In some demonstrative aspects, an RU allocation 201 of the RUs/MRUs to the users may be indicated by RU allocation subfields of a common field in the SIG field.

In some demonstrative aspects, as shown in Fig. 2, a first user (user1) may be allocated with a first RU/MRU, a second user (user2) may be allocated with a second RU/MRU, a third user (user3) may be allocated with a third RU/MRU 203, a fourth user (user4) may be allocated with a fourth RU/MRU, and/or a fifth user (user5) may be allocated with a fifth RU/MRU.

In some demonstrative aspects, the first user may include a non-UEM user, which may be assigned with a single MCS for the first RU/MRU; the second user may include a non-UEM user, which may be assigned with a single MCS for the second RU/MRU; the fourth user may include a non-UEM user, which may be assigned with a single MCS for the fourth RU/MRU; and/or the fifth user may include a non-UEM user, which may be assigned with a single MCS for the fifth RU/MRU.

In some demonstrative aspects, as shown in Fig. 2, the third user may include a UEM user, which may have a first MCS assigned to a first sub-RU/MRU 207 in the third RU/MRU 203, and a second MCS assigned to a second sub-RU/MRU 209 in the third RU/MRU 203.

In some demonstrative aspects, user-specific field 200 may include a plurality of user fields corresponding to the plurality of users. For example, an order of the user fields in user-specific field 200 may be according to an order of the RU allocations to the users, e.g., as indicated by the RU allocation subfields of the common field.

For example, a user field 205 of a first user (user 1) may be first in order of the user-specific field 200, which lets user 1 know that its RU/MRU is also the first RU/MRU of RUs/MRUs 201, for example, based on RU/MRU assignments 201 provided by the RU allocation subfields of the common field.

In some demonstrative aspects, as shown in Fig. 2, the third user (user 3) may be assigned with a plurality of user fields 202 corresponding to the plurality of sub-RUs/MRUs 203 allocated to the third user. For example, as shown in Fig. 2, the third user (user 3) may be assigned with a user field 211 corresponding to the first sub-RU/MRU 207, and/or a user field 213 corresponding to the first sub-RU/MRU 209, e.g., as described below.

In some demonstrative aspects, as shown in Fig. 2, user-specific field 200 may be encoded to include one or more user encoding blocks. For example, as shown in Fig. 2, user-specific field 200 may include a user encoding block 212 ("1^{st} user encoding block"), a user encoding block 214 ("2^{nd} user encoding block"), and/or a user encoding block 216 ("3^{rd} user encoding block").

In some demonstrative aspects, one or more user encoding blocks, e.g., most user encoding blocks, may be configured to encode across two user fields, e.g., followed by a CRC field and a Tail field.

For example, as shown in Fig. 2, user encoding block 212 may include the user field 205 ("User 1's user field"), which corresponds to the RU/MRU of User 1, and a user field 215 ("User 2's user field"), which corresponds to and the RU/MRU of User 2. For example, as shown in Fig. 2, user encoding block 212 may include a CRC+Tail field 217, for example, based on user field 205 and user field 215.

For example, as shown in Fig. 2, user encoding block 214 may include the user field 211 ("User 3's user field-1"), which corresponds to the sub-RU/MRU 207 of User 3, and the user field 213 ("User 3's user field-2"), which corresponds to the sub-RU/MRU 209 of User 3. For example, as shown in Fig. 2, user encoding block 214 may include a CRC+Tail field, for example, based on user field 211 and user field 213.

In some demonstrative aspects, a last user encoding block may only encode one user field, for example, when the number of user fields is odd.

In some demonstrative aspects, as shown in Fig. 2, a number of user fields in user-specific field 200 may be equal to a number of RU/MRU allocations in the RU/MRU allocation 201, e.g., including the RU/MRU allocations for the non-UEM users and the sub-RU/MRU allocations for the UEM users.

In some demonstrative aspects, as shown in Fig. 2, the total number of user fields for non-UEM users may be equal to the number of non-UEM users, and a non-UEM user, e.g., each non-UEM user, may have a corresponding user field, which may be configured to carry, e.g., may only carry, information of one MCS.

In some demonstrative aspects, as shown in Fig. 2, the total number of user fields for UEM users may be equal to the total number of sub-RU/MRU allocations for the LTEM users. For example, a UEM user, e.g., each the third user, may have a plurality of user fields, which may be configured to carry information of an MCS for a corresponding sub-RU/MRU for the UEM user.

In some demonstrative aspects, as shown in Fig. 2, a user field for a non-UEM user, e.g., the user fields 205 and/or 215, may include a STA-ID field 204 to identify the non-UEM user, e.g., User 1.

In some demonstrative aspects, as shown in Fig. 2, STA-ID field 204 may be followed by an MCS field 206, which may include an MCS index assigned to the RU/MRU allocation for the user 1.

In some demonstrative aspects, as shown in Fig. 2, user field 205 may include a coding field 208, and a spatial configuration field 210 after MCS field 206.

For example, as shown in Fig. 2, a user field 205 ("user 1's user field") in user-specific field 200 may include MCS field 206 carrying information of only one MCS.

In some demonstrative aspects, a user may identify its user field, for example, by blindly scanning all user fields until finding one user field with a STA-ID of the user.

In some demonstrative aspects, after identifying its user field, the user may extract from its user field information of MCS, coding, and/or spatial streams, e.g., from the MCS subfield 206, the coding field 208, and/or the spatial configuration field 210.

In some demonstrative aspects, a user may be considered as an UEM user over a plurality of frequency sub-channels.

In some demonstrative aspects, an RU/MRU of the UEM user may be split into *M* sub-RU/MRUs with *M* MCSs, which may allow the UEM user to be regarded as *M* fake users in the user-specific field 200 of the EHT-SIG field.

In some demonstrative aspects, as shown in Fig. 2, user 3 may be identified as a UEM user over a plurality of frequency sub-channels.

In some demonstrative aspects, as shown in Fig. 2, the RU/MRU 203 (RU/MRU of user 3) may be split into two sub-RU/MRUs, e.g., the sub-RU/MRU 207 (sub-RU/MRU 1) and the sub-RU/MRU 209 (sub-RU/MRU 2), which may be assigned with two respective MCSs.

For example, when configuring the RU allocation subfields of a common field in an EHT-SIG, the sub-RU/MRU 207 and sub-RU/MRU 209, e.g., user 3's split RU/MRU segments, may be, e.g., may need to be, considered as two RU/MRUs, e.g., as described above with reference to Table 1.

In some demonstrative aspects, the number of user fields for a UEM user may be equal to a number of the MCSs assigned to the UEM user.

In some demonstrative aspects, as shown in Fig. 2, user 3 may have two user fields 202 corresponding to the two MCSs assigned to the user 3.

In some demonstrative aspects, as shown in Fig. 2, user fields 202 may include the user field 211 (user 3's user field-1) and the user field 213 (user 3's user field-2), which may possess the same STA-ID but may indicate different MCSs.

In some demonstrative aspects, the UEM user (user 3) may identify the RU/MRU assignment 203 for the UEM user, for example, based on the RU/MRU allocation 201 indicated by the common field in the SIG field.

In some demonstrative aspects, the UEM user (user 3) may blindly scan one or more, e.g., all, user fields in user-specific field 200 to find its user fields, for example, through the STA-ID subfield.

In some demonstrative aspects, after scanning the user fields, the UEM user may acquire information on the order and/or location of all its *M* user fields, e.g., according to the ordered *M* sub-RU/MRUs of the UEM user in the RU/MRU allocation 201. For example, the *M* user fields may provide *M* MCSs indicating MCSs of *M* sub-RU/MRUs of the UEM user.

In some demonstrative aspects, the UEM user (user 3) may determine the UEM MCS assignment for the UEM user, for example, based on the MCS subfields in the user fields for the UEM user. For example, an *i^{th}* user field for the UEM user may include an MCS subfield configured to indicate an MCS assigned to an *i^{th}* sub-RU/MRU allocated to the UEM user per the RU/MRU allocation 201.

In some demonstrative aspects, the user fields for a UEM user, e.g., the user fields 211 and 213 may be configured to have a same bit length as the user fields for the non-UEM users, for example, to provide a technical solution to support the users to blindly scan all user fields and find user fields by their STA-IDs.

For example, a bit length of each of the user fields 211 and 213 may be equal to the bit length of each of the user fields 205 and 215.

For example, the user fields of unequal MCS users may have the same bit length as user fields of non-unequal MCS users.

For example, each of the user fields 205, 215, 211 and 213 may be configured to have a bit length of 22 bits, or any other bit length.

In some demonstrative aspects, as shown in Fig. 2, the plurality of user fields of the UEM user, e.g., user fields 211 and 213, may be located right next to each other, for example, in case one RU/MRU, e.g., RU/MRU 203, is divided into a plurality of sub-RU/MRUs, e.g., sub-RU/MRUs 207 and 209.

In some demonstrative aspects, a plurality of RU/MRUs may be assigned to a UEM user. For example, the user fields of the UEM user may be adjacent to each other, e.g., in case the assigned RU/MRUs are adjacent with each other.

In other aspects, user fields for a UEM user may be located apart from each other, e.g., in case the RU/MRUs assigned to the UEM user are apart from each other.

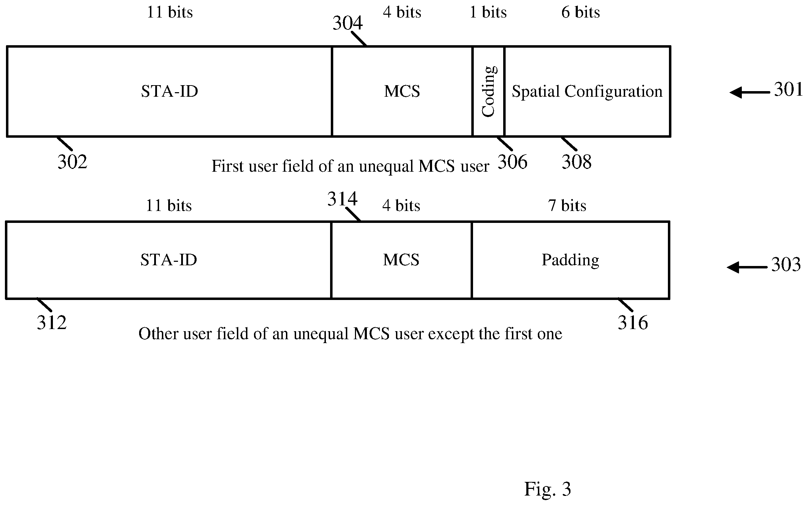

Reference is made to Fig. 3, which schematically illustrates a format of a user field, in accordance with some demonstrative aspects.

For example, device 102 (Fig. 1), device 140 (Fig. 1), and/or device 160 (Fig. 1) may be configured to generate, transmit, receive and/or process a frame including user-specific field 200 (Fig. 2), which may include the user field of Fig. 3 to indicate to a UEM user a UEM assignment.

In some demonstrative aspects, the UEM user may have multiple user fields, the number of which may be equal to the number of MCSs of the UEM user, e.g., as described above with reference to Fig. 2.

In some demonstrative aspects, as shown in Fig. 3, a user field for the UEM user may be configured according to a user field format 301, for example, when the user field is a first in order user field for the UEM user.

For example, user field 211 (Fig. 2) may include some or all of the subfields of user field 301.

In some demonstrative aspects, as shown in Fig. 3, the user field for the UEM user may be configured according to a user field format 303, for example, when the user field is a non first in order user field for the UEM user.

For example, user field 213 (Fig. 2) may include some or all of the subfields of user field 303.

In some demonstrative aspects, the user fields of UEM users, e.g., user fields 301 and user field 303, may be configured to have the same bit length as user fields of non-UEM users, for example, to provide a technical solution to let users blindly scan one or more, e.g., all, user fields and to find user fields by their STA-IDs.

In one example, as shown in Fig. 3, user field 301 and user field 303 may each have a length of 22 bits, e.g., similar to a length of each of the user fields 205 and 215 (Fig. 2).

In another example, user field 301 and/or user field 303 may have any other length.

In some demonstrative aspects, a format of the user field for the UEM user may depend on a location of the user field relative to other user fields for the same UEM user, e.g., as described below.

In some demonstrative aspects, as shown in Fig. 3, user field 301 may be configured according to a first-in-order user field format, which may be applied for a first-in-order user field for a LTEM user, e.g., as described below.

In some demonstrative aspects, as shown in Fig. 3, user field 303 may be configured according to a non first-in-order user field format, which may be applied for a non first-in-order user field for a UEM user, e.g., as described below.

For example, user field 301 may be configured in accordance with a format of a non-UEM user field, for example, a user field format in accordance with the *IEEE 802.11be Specification.*

In some demonstrative aspects, as shown in Fig. 3, a first-in-order user field of a plurality of user fields of the UEM user may have a format similar to, e.g., identical with, a user field format of a non-UEM user.

In some demonstrative aspects, as shown in Fig. 3, user field 301 may include a STA-ID subfield 302 to indicate a STA-ID of the UEM user.

In some demonstrative aspects, as shown in Fig. 3, user field 301 may include an MCS subfield 304, e.g., after the STA-ID subfield 302, to indicate an MCS to be applied to a corresponding first-in-order sub-RU/MRU for the UEM user.

In some demonstrative aspects, as shown in Fig. 3, user field 301 may include a coding subfield 306, and/or a spatial configuration subfield 308, for example, after the MCS subfield 304.

In some demonstrative aspects, the coding subfield 306 may be configured to indicate a coding to be applied for the plurality of sub-RU/MRUs for the UEM user, e.g., to all of the sub-RU/MRUs for the UEM user.

In some demonstrative aspects, the spatial configuration subfield 308 may be configured to indicate a spatial configuration to be applied for the plurality of sub-RU/MRUs for the UEM user, e.g., to all of the sub-RU/MRUs for the UEM user.

In some demonstrative aspects, a non first-in-order user field of the plurality of user fields of the UEM user may be configured to include, e.g., may only need to carry, information of STA-ID and MCS, while leaving the rest of the bits padded and/or reserved.

For example, as shown in Fig. 3, user field 303 may be configured as a non first-in-order user field of the UEM user, and may include a STA-ID subfield 312, an MCS subfield 314, and/or padding bits 316. For example, the MCS subfield 314 may be set to indicate an MCS to be applied to a corresponding non first-in-order sub-RU/MRU for the UEM user.

In some demonstrative aspects, the STA-ID subfield 302 of a first-in-order user field for a LTEM user, e.g., the user field 211 (Fig. 1), and the STA-ID subfield 312 of a non first-in-order user field for the UEM user, e.g., the user field 213 (Fig. 1), may be set to a same STA-ID, e.g., to identify the UEM user.

In some demonstrative aspects, user field 303 may be configured to carry one or more additional indications, for example, by replacing some of the padding bits with one or more additional subfields, e.g., as described below.

In one example, user field 303 may be configured to include a subfield ("RU/MRU index") to indicate an index of an assigned sub-RU/MRU of a plurality of sub-RU/MRUs. For example, the RU/MRU index subfield may be set to a value of 1 to indicate a second sub-RU/MRU of the plurality of sub-RU/MRUs.

In another example, user field 303 may be configured to include a subfield ("total number of RUs/MRUs") to indicate a total number of the assigned sub-RU/MRUs for the UEM user.

In another example, user field 303 may be configured to include a subfield ("spatial configuration") to indicate a spatial configuration for a corresponding sub-RU/MRU, for example, such that the same or different spatial stream(s) may be assigned to the sub-RU/MRUs.

Referring back to Fig. 1, in some demonstrative aspects, device 102, device 140, and/or device 160 may be configured to implement an unequal MCS signaling mechanism configured to support allocation of unequal MCSs over both a plurality of frequency sub-channels and a plurality of spatial streams, e.g., as described below.

In some demonstrative aspects, SNR conditions may be different over both frequency sub-channels and spatial streams. For example, a difference in the SNR conditions may be caused, for example, by different primary/secondary channel detection sensitivities and/or MIMO gains.

In some demonstrative aspects, device 102, device 140, and/or device 160 may be configured to implement an unequal MCS signaling mechanism, which may be configured to provide a technical solution to support allocation of an UEM over both a plurality of frequency sub-channels and a plurality of spatial streams, e.g., as described below.

In some demonstrative aspects, the unequal MCS signaling mechanism may utilize a user-specific field format, which may be configured to support allocation of unequal MCS over both the plurality of frequency sub-channels and the plurality of spatial streams, e.g., as described below.

In some demonstrative aspects, the unequal MCS signaling mechanism may be configured to provide a technical solution to support signaling to an unequal MCS user an indication regarding an unequal MCS over the plurality of spatial streams, e.g., as described below.

In some demonstrative aspects, a predefined MCS index, e.g., an EHT-MCS 14 (1110) index or any other predefined index, may be used as an UEM indicator, e.g., as described below.

For example, the EHT-MCS 14 (1110) index may be utilized, e.g., in accordance with an *IEEE 802.11be Specification,* in an EHT duplicate (DUP) transmission mode to indicate an EHT Single User (SU) transmission, for example, when a PPDU Type and Compression Mode subfield in U-SIG is set to 1.

In some demonstrative aspects, the EHT-MCS 14 (1110) index may be used to indicate a UEM assignment for a UEM user, for example, when a PPDU Type and Compression Mode is 0 or 2, e.g., indicating a non EHT SU transmission.

In some demonstrative aspects, the EHT-MCS 14 (1110) index may be used to indicate a UEM assignment for a UEM user, for example, even in case of an EHT SU transmission. For example, in case of a UEM assignment for a UEM user in a SU transmission, a PPDU Type and Compression Mode subfield may be set to the value 3 and the MCS subfield for the UEM user may be se to the EHT-MCS 14 (1110) index, for example, to indicate UEM assignment for the UEM user.

In some demonstrative aspects, a mapping may be defined from a plurality of subfield setting combinations, e.g., including the PPDU type and compression subfield setting and the MCS subfield setting, to a UEM user type, e.g., as follows:

**Table 2**

| Subfield | Unequal MCS user type |
|---|---|
| PPDU Type and Compression Mode subfield 0/2 + EHT-MCS 14 (1110) | Unequal MCS user under DL OFDMA/non-OFDMA DL MU-MIMO |
| PPDU Type and Compression Mode subfield 1 + EHT-MCS 14 (1110) | DUP Transmission |
| PPDU Type and Compression Mode subfield 3 + EHT-MCS 14 (1110) | Unequal MCS user under SU transmission |

In some demonstrative aspects, device 102, device 140, and/or device 160 may be configured to implement an unequal MCS signaling mechanism, which may be configured to utilize a fake user-based user-specific field to support allocation of a UEM, for example, over frequency sub-channels and/or spatial streams, e.g., over both frequency sub-channels and spatial streams, e.g., as described below.

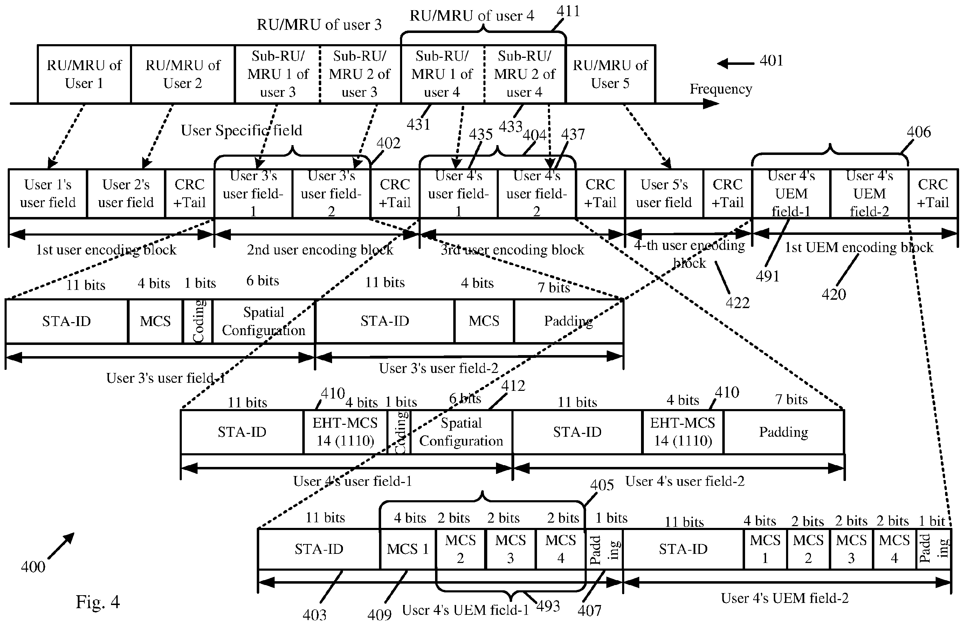

Reference is made to Fig. 4, which schematically illustrates a user-specific field 400, in accordance with some demonstrative aspects.

For example, device 102 (Fig. 1) may be configured to generate, transmit, receive and/or process a frame including a SIG field, which may be configured to include user-specific field 400 to provide user-specific information corresponding to an RU/MRU allocation 401 for one or more users.

For example, device 140 (Fig. 1) and/or device 160 (Fig. 1) may include, operate as, perform a role of, and/or perform the functionality of the one or more users.

In some demonstrative aspects, an AP, e.g., an AP implemented by device 102 (Fig. 1), may determine an RU/MRU assignment, including a size of RU/MRU, RU/MRU placement, and/or RU/MRU allocation to the one or more users.

For example, the AP may transmit information of the RU/MRU size and/or RU/MRU placement, for example, through RU allocation subfields of a common filed in a SIG field, e.g., an EHT-SIG field, of a DL PPDU, e.g., in accordance with the *IEEE 802.11be Specification* and/or any other specification and/or protocol.

For example, the AP may set user fields in a user-specific field 400 of the EHT-SIG field to provide information of the order of RU allocations, which may be according to the order of user fields, e.g., in accordance with the *IEEE 802.11be Specification.*

In some demonstrative aspects, as shown in Fig. 4, a plurality of RUs/MRUs 401, e.g., including 5 RUs/MRUs may be assigned to a plurality of users, e.g., 5 users. For example, each of RUs/MRUs 401 may be assigned to a user.

In some demonstrative aspects, an RU allocation 401 of the RUs/MRUs to the users may be indicated by RU allocation subfields of a common field in the SIG field.

In some demonstrative aspects, as shown in Fig. 4, a first user (user1) may be allocated with a first RU/MRU, a second user (user2) may be allocated with a second RU/MRU, a third user (user3) may be allocated with a third RU/MRU, e.g., including RU/MRU 203 (Fig. 2), a fourth user (user4) may be allocated with a fourth RU/MRU 411, and/or a fifth user (user5) may be allocated with a fifth RU/MRU.

In some demonstrative aspects, the first user may include a non-UEM user, which may be assigned with a single MCS for the first RU/MRU; the second user may include a non-UEM user, which may be assigned with a single MCS for the second RU/MRU; and/or the fifth user may include a non-UEM user, which may be assigned with a single MCS for the fifth RU/MRU.

In some demonstrative aspects, as shown in Fig. 4, the third user may include a UEM user, which may have a first MCS assigned to a first sub-RU/MRU in the third RU/MRU, and a second MCS assigned to a second sub-RU/MRU in the third RU/MRU, e.g., as described above with reference to Fig. 2.

In some demonstrative aspects, as shown in Fig. 4, the fourth user may include a UEM user, which may have a plurality of MCSs assigned to a first sub-RU/MRU 431and a second sub-RU/MRU 433 in the fourth RU/MRU 411, e.g., as described below.

In some demonstrative aspects, user-specific field 400 may include a plurality of user fields corresponding to the plurality of users. For example, an order of the user fields in user-specific field 400 may be according to an order of the RU allocations to the users, e.g., as indicated by the RU allocation subfields of the common field.

In some demonstrative aspects, as shown in Fig. 4, the third user (user 3) may be assigned with a plurality of user fields corresponding to the plurality of sub-RUs/MRUs allocated to the third user, e.g., as described above with reference to Fig. 2.

In some demonstrative aspects, as shown in Fig. 4, the fourth user (user 4) may be assigned with a plurality of user fields 400 corresponding to the plurality of sub-RUs/MRUs 411 allocated to the fourth user. For example, as shown in Fig. 4, the fourth user (user 4) may be assigned with a user field 435 corresponding to the first sub-RU/MRU 431, and/or a user field 437 corresponding to the first sub-RU/MRU 433, e.g., as described below.

In some demonstrative aspects, an RU/MRU assigned to a user may be split into *M* sub-RU/MRUs with *M* MCSs. For example, a sub-RU/MRU, e.g., each sub-RU/MRU, may have a user field, which may be identified, for example, by blindly scanning a STA-ID field in the user field, e.g., as described above.

In some demonstrative aspects, a user, e.g., the user 3, may be assigned with MCSs as a UEM user, for example, just over frequency sub-channels. For example, the user fields for the user 3 may be configured such that of the plurality of sub-RU/MRUs of the user 3 may be mapped to a plurality of user fields 402, e.g., such that each of its sub-RU/MRUs may be mapped to one user field 402.

In some demonstrative aspects, as shown in Fig. 4, the user fields 402 may be configured according to a same format of user field 301 (Fig. 3) and user field 303 (Fig. 3). For example, one or more of, e.g., each of, user fields 402 may include a STA-ID subfield, an MCS subfield, and the first in-order user field for the user includes the coding and/or spatial configuration subfields, e.g., as described above with reference to Figs. 2 and 3.

In some demonstrative aspects a user, e.g., the user 4, may be assigned with MCSs as a UEM user, for example, over both frequency sub-channels and spatial streams, e.g., as described below.

In some demonstrative aspects, as shown in Fig. 4, user fields 404 of user 4 may include a STA-ID subfield, an MCS subfield, a coding subfield, and/or a spatial configuration subfield, for example, similar to the format of user field 301 (Fig. 3) and user field 303 (Fig. 3).

For example, as shown in Fig. 4, a first-in-order user field for the user 4, e.g., the user field 435, may include a STA-ID subfield, an MCS subfield 410, a coding subfield, and/or a spatial configuration subfield 412, for example, similar to the format of user field 301 (Fig. 3).

For example, as shown in Fig. 4, a non first-in-order user field for the user 4, e.g., the user field 437, may include a STA-ID subfield, an MCS subfield 410, and a padding segment and/or additional subfields, for example, similar to the format of user field 303 (Fig. 3).

In some demonstrative aspects, as shown in Fig 4, the MCS subfields 410 of user fields 404 may include a predefined MCS index, e.g., the EHT-MCS 14 (1110) index or any other suitable predefined MCS index, for example, instead of actual MCS information.

For example, the predefined MCS index, e.g., the EHT-MCS 14 (1110) index, may indicate that the UEM user (user 4) has a UEM assignment over a plurality of spatial streams.

In some demonstrative aspects, as shown in Fig 4, the user-specific field 400 may be configured to include one or more UEM fields 406 corresponding to the user 4, e.g., as described below.

In some demonstrative aspects, the UEM fields 406 corresponding to the user 4 may be configured to include UEM information for the user 4, e.g., as described below.

In some demonstrative aspects, the UEM fields 406 corresponding to the user 4 may be configured to include an assignment of a plurality of MCSs to a plurality of frequency sub-channels and the plurality of spatial streams in the RU allocation 411 for the user 4, e.g., as described below.

In some demonstrative aspects, the user 4 may search for the one or more UEM fields 406, for example, based on identifying the predefined MCS index in the MCS subfields 410, which indicates that the user 4 is the UEM user over spatial streams. For example, the user 4 may search for the UEM fields, e.g., UEM fields 406, which include the STA-ID of the user 4, in order to identify the MCS information pertaining to the user 4.

In some demonstrative aspects, as shown in Fig, 4, the one or more UEM fields in the user-specific field 400, e.g., all UEM fields, may be located after all of the user fields for all users.

In some demonstrative aspects, the one or more UEM fields in the user-specific field 400, e.g., UEM fields 406 for the user 4, may be encoded in UEM encoding blocks, which may be located, e.g., may always be located, at the end of the user encoding blocks.

For example, as shown in Fig. 4, a UEM encoding block 420, e.g., including the UEM fields 406, may be located after a last user encoding block 422.

In some demonstrative aspects, one or more of, e.g., each of, the UEM encoding blocks in the user-specific field 400 may encode one or more, e.g., up to two, UEM fields, which may come from the same user or different users, e.g., similar to the format of the user encoding blocks discussed above with reference to Fig. 2.

For example, as shown in Fig. 4, UEM encoding block 420 may include two UEM fields 406, and a CRC field, e.g., based on the two UEM fields 406.

In some demonstrative aspects, as shown in Fig. 4, a length of a UEM field, e.g., a length of each of UEM fields 406, may be the same as a length of each of user fields 404, for example, for simplifying implementation and/or increasing compatibility. For example, as shown in Fig. 4, a length of each of UEM fields 406 may be 22 bits, e.g., similar to the length of each the user fields of user-specific field 400.

In some demonstrative aspects, as shown in Fig. 4, a UEM field 491 may include a STA-ID subfield 403, e.g., an 11-bit STA-ID subfield, which may be followed by a plurality of MCS subfields 405, e.g., four MCS subfields, with MCS information. For example, the UEM field 491 may include a 1-bit padding subfield 407, e.g., after the MCS subfields 405.

In some demonstrative aspects, the user 4 may discover its UEM fields 406, for example, by blindly scanning all UEM fields to find UEM fields with the STA-ID of the user 4.

In some demonstrative aspects, the MCS subfields 405 of a UEM field 491 corresponding to a sub-RU/MRU allocation may be configured to indicate MCSs to be applied to a plurality of respective spatial streams over the sub-RU/MRU allocation.

For example, the MCS subfields 405 of a UEM field 491 corresponding to the sub-RU/MRU allocation 431 may be configured to indicate MCSs to be applied to up to four respective spatial streams over the sub-RU/MRU allocation 431.

For example, the MCS subfields 405 of a UEM field 491 corresponding to the sub-RU/MRU allocation 433 may be configured to indicate MCSs to be applied to up to four respective spatial streams over the sub-RU/MRU allocation 433.

In some demonstrative aspects, the MCS subfields 405 may be configured according to a differential-MCS format, for example, in order to provide a technical solution to support reduced overhead, e.g., as described below.

In some demonstrative aspects, as shown in Fig. 4, a first-in-order MCS subfield 409 in the UEM field 491 may have a size of 4 bits, e.g., to support 4-bit binary numbers. For example, the MCS subfield 409 may be configured to indicate an MCS index for the user (base MCS). For example, the MCS subfield 409 may be configured to indicate an MCS index with the largest modulation of the user 4.

In some demonstrative aspects, as shown in Fig. 4, the remaining MCS subfields 493, e.g., the MCS subfields after the first MCS subfield 409, may have a reduced bit-size, e.g., a size of 2 bits, for example, to support 2-bit binary numbers. For example, the 2-bit MCS subfields 493 may indicate a modulation order deduction, for example, compared to the previous MCS 409, e.g., rather than a full 4-bit MCS index. For example, MCSs for a same user, e.g., the MCSs 405 of the user 4, may share the same coding rate, e.g., while only modulations may be different between the MCSs, e.g., in accordance with an *IEEE 802.11be Specification.*

In some demonstrative aspects, as shown in Fig. 4, the user-specific field 400 may include a single UEM field 491 per sub-RU/MRU allocation for the user 4, for example, in case the user 4 has up to four spatial streams for a sub-RU/MRU allocation.

In some demonstrative aspects, the user-specific field 400 may include a plurality of UEM fields 491 for sub-RU/MRU allocation for a UEM user, for example, in case the UEM user has more than four spatial streams for a sub-RU/MRU allocation.

For example, the user 4 may be a UEM user over both frequency sub-channels and spatial streams with six spatial streams. For example, the user 4 may obtain the information of the spatial streams for the user 4 based on the spatial configuration subfields of a first-in-order user field of the user 4, e.g., user 4's user field-1. According to this example, the user 4 may have four UEM fields, for example, where each two UEM fields may correspond to a respective RU/MRU allocation, and may contain six 2-bit MCSs for the six spatial streams over the RU/MRU allocation.

In some demonstrative aspects, as shown in Fig. 4, the RU/MRU 411 assigned to the user 4 may be split into *M* sub-RU/MRUs, e.g., including the sub-RU/MRUs 431 and 433. For example, the user 4 may expect to find *M* user fields with the STA-ID of the user 4, for example, by blindly scanning all user fields in the user-specific field 400.

In some demonstrative aspects, the user 4 may identify itself as a UEM user over a plurality of spatial streams, for example, by reading the EHT-MCS 14 index in MCS subfields 410 of the user fields including the STA-ID of the user 4.

In some demonstrative aspects, the user 4 may be aware of the number of its spatial streams, for example, through the spatial configuration subfield 412 in the first-order user field 435 for the user 4 (user 4's user field-1).

For example, a number of user 4's spatial streams be S. According to this example, the user 4 may expect to totally obtain *M*×*S* MCSs in the UEM fields 406 for the user 4, which may be encoded in UEM encoding block 420 located at the end of the user encoding blocks. For example, the user 4 may search for its UEM fields 406, for example, by blindly scanning all UEM fields to find the UEM fields with the STA-ID of the user 4.

In some demonstrative aspects, the user-specific field 400 may be configured to reuse a format for a user field for a UEM user, e.g., in compliance with an *IEEE 802. 11be Specification.* For example, the user field format for the UEM user, e.g., the user fields 435 and/or 437, may be configured to include the STA-ID, MCS, and/or spatial configuration subfields, e.g., according to a format compatible with the *IEEE 802.11be Specification.*

For example, a user may search each user field for its STA-ID. For example, it may be defined that the user is to determine that an RU/MRU, MCS, and/or a spatial stream in a user field are to be allocated to the user as a UEM user, for example, if the STA-ID in the user field matches the STA-ID of the user.

For example, the format of the user-specific field 400 may provide a technical solution to support signaling to the UEM user different MCSs for different frequency RUs and different spatial streams, respectively.

Referring back to Fig. 1, in some demonstrative aspects, device 102, device 140, and/or device 160 may be configured to implement an unequal MCS signaling mechanism configured to support an unequal MCS allocation over both frequency sub-channels and spatial streams, for example, by signaling a UEM user as multiple fake users, e.g., as described above.

In some demonstrative aspects, the unequal MCS signaling mechanism may utilize a fake user-based user field format, for example, to signal the unequal MCS allocation information to the UEM user, e.g., as described above.

In some demonstrative aspects, the unequal MCS signaling mechanism utilizing fake user-based user field format, e.g., as described above, may provide a technical solution to preserve a format of a common field and/or a user-specific field of an EHT-SIG field, for example, to guarantee compatibility with an *IEEE 802.11be Specification.*

In some demonstrative aspects, for example, in some implementations, use cases and/or scenarios, there may be some overhead when utilizing a fake user-based user field format, for example, as a relatively large number of bits may be consumed by the STA-ID subfields and/or the padding in the user fields and/or UEM fields. For example, the fake user-based user field format may utilize the STA-ID subfields to support the users, which may not be able to exactly pinpoint their user fields and UEM fields, for example, when blindly scanning through STA-ID subfields.

In some demonstrative aspects, device 102, device 140, and/or device 160 may be configured to implement an unequal MCS signaling mechanism configured to support an unequal MCS signaling via a configuration of a user-specific field, e.g., as described below.

In some demonstrative aspects, the unequal MCS signaling mechanism may be configured to support an unequal MCS, for example, for a Wi-Fi 8 (UHR) implementation, e.g., as described below.

In some demonstrative aspects, the unequal MCS signaling mechanism may be configured to utilize an improved user-specific field format, for example, to provide a technical solution to support reduced overhead, e.g., as described below.

In some demonstrative aspects, the unequal MCS signaling mechanism may be configured to provide a technical solution to support allocation of an unequal MCS over a plurality of frequency sub-channels and/or a plurality of spatial streams, e.g., as described below.

In some demonstrative aspects, the unequal MCS signaling mechanism may be configured to utilize a user field format and a UEM field format, which may be configured to provide a technical solution to support allocation of an unequal MCS over a plurality of frequency sub-channels and/or a plurality of spatial streams, e.g., as described below.

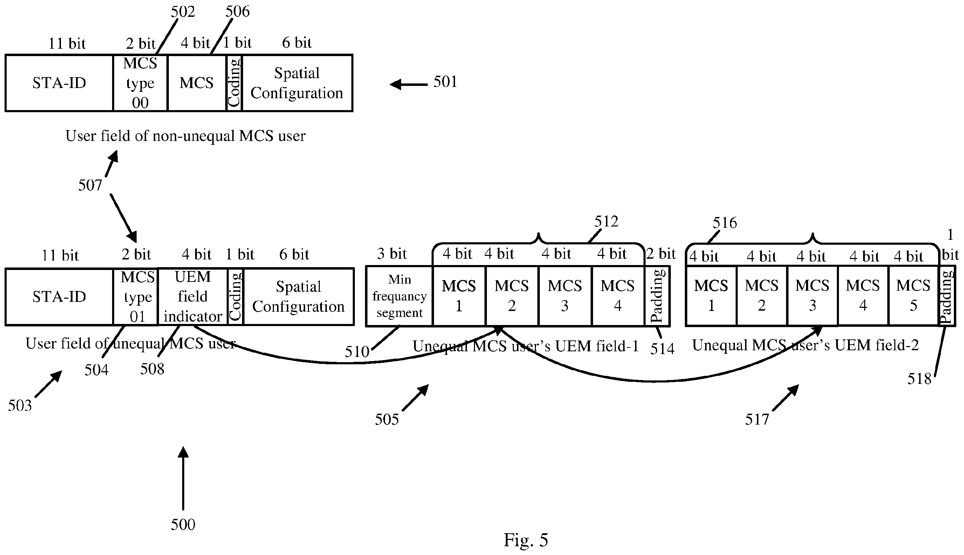

Reference is made to Fig. 5, which schematically illustrates a format of a user field 500 to identify one or more UEM fields, in accordance with some demonstrative aspects.

For example, device 102 (Fig. 1) and/or device 140 (Fig. 1) may be configured to generate, transmit, receive and/or process a frame including user field 500 configured to indicate a UEM assignment to a UEM user.

In some demonstrative aspects, as shown in Fig. 5, the user field 500 may be configured according to a user field format 501 (non-LTEM user field format), for example, for a non-UEM user, e.g., as described below.

In some demonstrative aspects, as shown in Fig. 5, the user field 500 may be configured according to a user field format 503 (UEM user field format), for example, for a UEM user, e.g., as described below.

In some demonstrative aspects, as shown in Fig. 5, user field 500 may be configured to have a length of 24 bits, for example, compared to the 22-bit length of a user field in accordance with an *IEEE 802.11 Specification.*

In some demonstrative aspects, user field 500 may include an MCS type subfield 507 configured to identify an MCS type for a user, e.g., as described below. For example, as shown in Fig. 5, the MCS type subfield 507 may have a length of 2 bits. In other aspects, the MCS type subfield 507 may have any other length.

In some demonstrative aspects, the MCS type subfield 507 may be configured to indicate whether a user of the user field 500 is a non-UEM user or a UEM user, e.g., as described below.

For example, as shown in Fig. 5, the MCS type subfield 507 in the user field 501 may be set to an MCS type value 502 configured to indicate that a user is a non-UEM user. For example, the MCS type value 502 value may include the value 00.

For example, as shown in Fig. 5, the MCS type subfield 507 in the user field 503 may be set to an MCS type value 504 configured to indicate that a user is a UEM user. For example, the MCS type value 504 value may include a value other than 00.

In some demonstrative aspects, the MCS type value 504 configured to indicate a type of the UEM assignment from a plurality of predefined UEM assignment types, e.g., as described below.

For example, the MCS type subfield 507 in user field 503 may be set to a first predefined value 504, e.g., 01, representing a UEM user over a plurality of frequency sub-channels.

For example, the MCS type subfield 507 in user field 503 may be set to a second predefined value 504, e.g., 10, representing a UEM user over a plurality of spatial streams.

For example, the MCS type subfield 507 in user field 503 may be set to a third predefined value 504, e.g., 11, representing a UEM user over both frequency channels and spatial streams.

In other aspects, any other additional or alternative mapping of MCS type values may be defined to indicate the MCS type.

In some demonstrative aspects, as shown in Fig. 5, it may be defined that when the user field 500 includes the MCS type subfield 507 including an MCS type value for a non-UEM user, then the user field 500 is to include an MCS index to be used by the non-UEM user, for example, in an MCS field, e.g., a 4-bit field following the MCS type subfield 507.

For example, as shown in Fig. 5, the user field 501 may include the MCS type value 502, which identifies a user as a non-UEM user, and the MCS type value 502 may be followed by an MCS subfield 506 having a length of 4 bits. For example, MCS subfield 506 may provide an index of MCS to be used by the non-UEM user.

In some demonstrative aspects, as shown in Fig. 5, it may be defined that when the user field 500 includes the MCS type subfield 507 including an MCS type value for a UEM user, then the user field 500 is to include UEM field indication information to be used by the UEM user to locate one or more UEM fields for the UEM user, e.g., as described below.

For example, as shown in Fig. 5, the user field 503 may include the MCS type value 504, which identifies a user as a UEM user, and may be followed by a UEM field indicator subfield 508 having a length of 4 bits. For example, UEM field indicator subfield 508 may inform the UEM user of a position of a first UEM field of the UEM user, e.g., a UEM field 505.

For example, MCS type subfield 504 may have a value of 01, and LTEM field indicator subfield 508 may have value of *0011.* According to this example, MCS type subfield 504 may indicate that a user is an UEM user over a plurality of frequency sub-channels, and UEM field indicator subfield 508 may indicate that a first UEM field of the UEM user is the 4th UEM field, e.g., if the value of *0000* is defined to indicate a first UEM field, (or a 3-rd UEM field, e.g., if the value of *0001* is defined to indicate a first UEM field).

In some demonstrative aspects, a total length of a UEM field, e.g., UEM field 505, may be the same as or shorter than a length of a user field. In one example, a UEM field may be defined to have a length of 21 bits or any other additional or alternative value.

In some demonstrative aspects, the UEM field indicator subfields 508 in user fields may be configured to provide the positions of UEM fields. For example, the UEM field indicator subfields 508 may be configured to provide a technical solution to avoid a need to include a STA-ID in the UEM field.

In some demonstrative aspects, the UEM fields may be configured to provide information of the MCS assignments, for example, in the form of minimum frequency segment and/or MCSs, e.g., as described below.

In some demonstrative aspects, a first-in-order UEM field (UEM field 1) of a UEM user may be configured according to a UEM field format, which may start with a 3-bit min frequency segment subfield, followed by four 4-bit MCS subfields, and a 2-bit padding. For example, as shown in Fig. 5, UEM field 505 may include a min frequency segment subfield 510, followed by four MCS subfields 512, and a padding subfield 514.

In some demonstrative aspects, a non first-in-order UEM field of a UEM user may be configured according to a UEM field format, which may carry, e.g., only carry, MCS information, which may include five 4-bit MCS subfields, e.g., followed by 1-bit padding. For example, as shown in Fig. 5, a UEM field 517 may include five MCS subfields 516, e.g., followed by a padding subfield 518.

In some demonstrative aspects, as shown in Fig. 5, min frequency segment subfield 510 may be implemented as a first subfield in a first UEM field, e.g., UEM field 505 (unequal MCS user's UEM field-1), for a UEM user, e.g., for each UEM user.

In some demonstrative aspects, min frequency segment subfield 510 may be configured to specify a partition of an RU or MRU for the UEM user, e.g., by using 3 bits to inform the UEM user of its minimum frequency segment with different MCSs.

In one example, a user's RU/MRU may be equally split into multiple sub-RU/MRUs with 26 subcarriers, 52 subcarriers, 106 subcarriers, 242 subcarriers, 484 subcarriers, 996 subcarriers, 2×996 subcarriers, or the like. According to this example, min frequency segment subfield 510 may indicate the number of subcarriers in each sub-RU/MRU with different MCS.

In another example, a partition lookup table may be defined for each RU and/or MRU size, respectively, and an entry index may be specified in min frequency segment subfield 510.

In some demonstrative aspects, a UEM user may know a bandwidth of its RU/MRU, for example, according to RU allocation subfields in a common field, and an order of its user field in a user-specific field. For example, the UEM user may calculate a number of its sub-RU/MRUs, and a number of MCSs the UEM user may, e.g., should, search for in its UEM fields, for example, based on the bandwidth of RU/MRU assigned to the UEM user and the order of the user field in the user specific field. For example, if a number of MCSs of the LTEM user is less than or equal to four, the UEM user may, e.g., may only need to, read one UEM field. For example, if the number of MCSs of the LTEM user is more than four, the LTEM user may seek for other LTEM fields, for example, in order to get all of its MCSs.

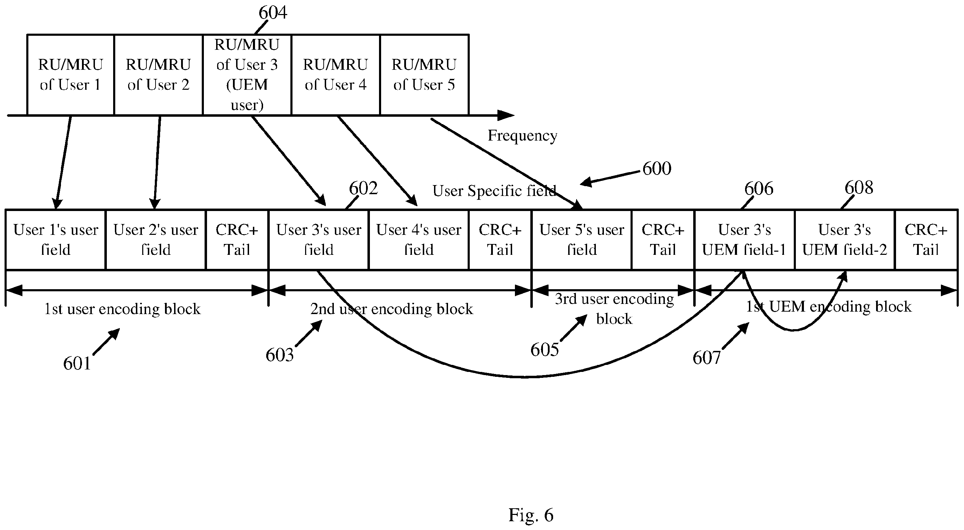

Reference is made to Fig. 6, which schematically illustrates a user-specific field 600, in accordance with some demonstrative aspects.

For example, device 102 (Fig. 1), device 140 (Fig. 1), and/or device 160 (Fig. 1) may be configured to generate, transmit, receive and/or process a frame including user-specific field 600 configured to indicate a UEM assignment for a UEM user.

In some demonstrative aspects, as shown in Fig. 6, user-specific field 600 may include one or more encoding blocks. For example, as shown in Fig. 6, user-specific field 600 may include a user encoding block 601, a user encoding block 603, a user encoding block 605 and/or a UEM encoding block 607.

In some demonstrative aspects, as shown in Fig. 6, the user encoding blocks may include one or more user fields, and a UEM encoding block may include one or more UEM fields.

In some demonstrative aspects, as shown in Fig. 6, UEM encoding block 607 may be configured to encode up to two UEM fields followed by CRC and Tail fields.

In some demonstrative aspects, UEM fields in UEM encoding block 607 may belong to one UEM user.

In other aspects, UEM fields in UEM encoding block 607 may belong to two different UEM users.

In some demonstrative aspects, as shown in Fig. 6, the UEM encoding blocs, e.g., including UEM encoding block 607, may follow the user encoding blocks.

In some demonstrative aspects, the user fields may have a fixed length, which may provide a technical solution for a user to be able to know the beginning and end bits of each user field, for example, to conduct blind scanning.

In some demonstrative aspects, UEM fields maybe configured to have a fixed length, and the UEM encoding blocks may be located after the user encoding blocks, for example, to support a technical solution for the user to be able to know the beginning and end bits of each UEM field.

In some demonstrative aspects, the user field and the UEM fields in user-specific field 600 may be configured to provide a technical solution to support a user in relatively easily finding a first UEM field for the user (UEM field-1), e.g., a UEM field 606. For example, the user may be able to find the UEM field 606, for example, according to the UEM field position information provided by the UEM field indicator subfield in the user fields for the user, e.g., UEM field indicator subfield 508 (Fig. 5).

In some demonstrative aspects, the UEM field indicator subfield for the UEM user, e.g., LTEM field indicator subfield 508 (Fig. 5), maybe configured to provide a position of a first-in-order UEM field of the UEM user. For example, other, e.g., non first-in-order, UEM fields, e.g., a UEM field-2 and/or a UEM field-3, may be, e.g., may always be, located after the first-in-order UEM field (UEM field-1).

In some demonstrative aspects, as shown in Fig. 6, an RU/MRU 604 assigned to a UEM user, e.g., a user 3, may be split into six sub-RUs with six MCSs.

In some demonstrative aspects, the user 3 may be aware of an RU/MRU assignment including the size and location of RU/MRUs for the user 3, for example, based on information in RU-allocation subfields of a common field in a SIG field, e.g., an EHT-SIG field and/or a UHR-SIG field.

In some demonstrative aspects, the user 3 may identify a user field 602 ("user 3's user field"), for example, by scanning all user fields in user-specific field 600. For example, the user 3 may identify that the user field 602 is in a third place among all user fields, for example, based on identifying a STA ID of the user 3 in user field 602.

In some demonstrative aspects, the user 3 may, e.g., automatically, be aware that the RU/MRU 604, e.g., which is the third RU/MRU among RU/MRUs, is assigned to the user 3.

In some demonstrative aspects, the user 3 may obtain coding and/or spatial configuration information from user field 602.

In some demonstrative aspects, the user 3 may identify itself as a UEM user, for example, through the MS type value in MCS type subfield 507 (Fig. 5) in user field 602.

In some demonstrative aspects, the user 3 may obtain a position of the first UEM field for the user 3, e.g., UEM field 606, for example, through UEM field indicator subfield 508 (Fig. 5) in user field 602. For example, UEM field indicator subfield 508 (Fig. 5) may include bits set to a value, e.g., 0000, indicating that UEM field 606 is a first-in-order UEM field among all UEM fields.

In some demonstrative aspects, the user 3 may attain information of a number of subcarriers in each sub-RU/MRU for the user 3, for example, through min frequency segment subfield 510 (Fig. 5) in UEM field 606.

In some demonstrative aspects, the user 3 may be aware of a number of its sub-RU/MRUs and/or MCSs, for example, based on the information of the number of subcarriers in each sub-RU/MRU.

For example, only one UEM field, e.g., the UEM field 1, may be assigned to the user 3, for example, in case the number of MCSs for the user 3 is less than or equal to four.

For example, more than one UEM field may be assigned to the user 3, for example, in case the number of MCSs for the user 3 is more than four.

For example, the user 3 may have six sub-RUs with six MCSs. According to this example, the user 3 may be aware that two UEM fields are assigned to the user 3, for example, as each first-in-order UEM field may only carry four MCS subfields, while other UEM fields, e.g., non first-in-order UEM fields, may carry five MCS subfields each, e.g., as described above.

For example, the user 3 may decode UEM field 606, which is pinpointed by UEM field indicator subfield 508 (Fig. 5) of user field 602.

For example, the user 3 may decode UEM field 608, which is next to UEM field 606, for example, to obtain all six MCSs for the user 3.

In some demonstrative aspects, it may be defined that, when a UEM user has more than one UEM field, one or more other UEM fields of the UEM user may always be located after its first-in-order UEM field, so that the UEM field indicator subfield may, e.g., may only need to, provide position information of the first-in-order UEM field of the UEM user.

Referring back to Fig. 1, in some demonstrative aspects, device 102, device 140, and/or device 160 may be configured to implement an unequal MCS signaling mechanism configured to enable allocation of an unequal MCS over a plurality of both frequency sub-channels and spatial streams, e.g., as described below.

In some demonstrative aspects, device 102, device 140, and/or device 160 may be configured to implement an unequal MCS signaling mechanism, which may be configured to utilize user-specific fields, including user fields and/or LTEM fields, to provide a technical solution to support allocation of an unequal MCS over both frequency sub-channels and spatial streams, e.g., as described below.

In some demonstrative aspects, the unequal MCS signaling mechanism may be configured to provide a technical solution to identify whether a user is a LTEM user or a non-LTEM user, e.g., as described below.

In some demonstrative aspects, the unequal MCS signaling mechanism may be configured to provide a technical solution to identify whether a LTEM user has an allocation of an unequal MCS over a plurality of frequency sub-channels, a plurality of spatial streams, or both, e.g., as described below.

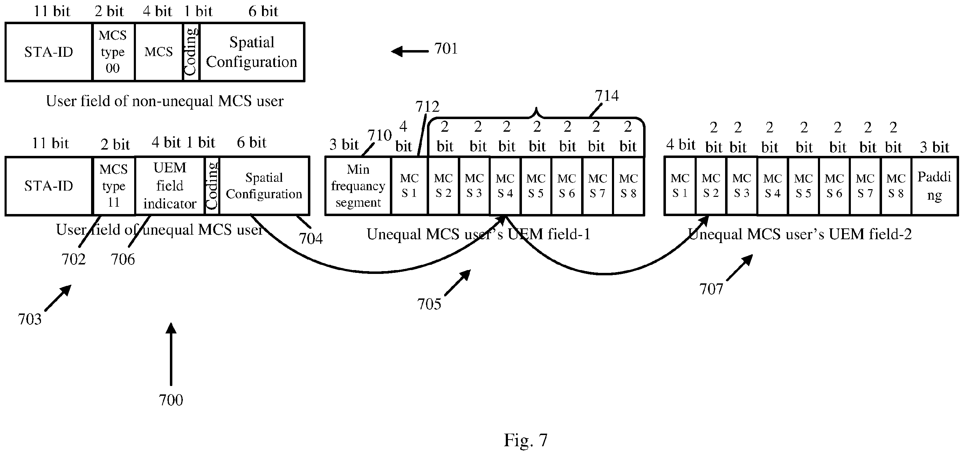

Reference is made to Fig. 7, which schematically illustrates a format of a user field 700 to identify one or more UEM fields, in accordance with some demonstrative aspects.

For example, device 102 (Fig. 1) and/or device 140 (Fig. 1) may be configured to generate, transmit, receive and/or process a frame including user field 500 configured to indicate a UEM assignment to a UEM user.

In some demonstrative aspects, as shown in Fig. 7, the user field 700 may be configured according to a user field format 701 (non-LTEM user field format), for example, for a non-UEM user, e.g., as described above with reference to Fig. 5.

In some demonstrative aspects, as shown in Fig. 7, the user field 700 may be configured according to a user field format 703 (UEM user field format), for example, for a UEM user, e.g., as described below.

In some demonstrative aspects, a user may identify its user field 703, for example, by blindly scanning all user fields to find the user field with a STA-ID of the user.

In some demonstrative aspects, the user may identify an MCS type for the user based on an MCS type value 702 in the user field 703, e.g., as described above. For example, the user may be identified as a UEM user over both frequency sub-channels and spatial streams, for example, based on MCS type value 702 including the value of 11, e.g., as described above.

In some demonstrative aspects, the user may obtain locations and number of its spatial streams, for example, through a spatial configuration subfield 704 of user field 703.

In some demonstrative aspects, the user may obtain a position of a first-in-order UEM field (unequal MCS user's UEM field-1) for the user, e.g., a LTEM field 705, for example, through a 4-bit UEM field indicator subfield 706, e.g., as described above.

In some demonstrative aspects, one or more, e.g., each, UEM field for a user having an allocation of UEM over both frequency sub-channels and spatial streams, may be configured to carry, e.g., to only carry, MCSs of spatial streams for a same, e.g., single, sub-RU/MRU.

For example, a user's RU/MRU may be split into two sub-RU/MRUs and may have four spatial streams per sub-RU/MRU. According to this example, a total number of spatial streams may be eight. According to this example, the user may have two UEM fields, e.g. a UEM field-1 and a UEM field-2, each of which including four MCSs of a respective sub-RU/MRU.

In some demonstrative aspects, a first-in-order UEM field may have a format different from a non first-in-order UEM field. For example, as shown in Fig. 7, the first-in-order UEM field, e.g., UEM field 705, may have a unique format, for example, compared to other UEM fields, e.g., non first-in-order UEM fields.

In some demonstrative aspects, as shown in Fig. 7, UEM field 705 may include a min frequency segment subfield 710, a 4-bit MCS subfield 712, and seven 2-bit MCS subfields 714.

For example, min frequency segment subfield 710 may indicate a number of subcarriers in each sub-RU/MRU with different MCS.

In some demonstrative aspects, a UEM user may use the information in min frequency segment subfield 710 to calculate how many sub-RU/MRUs the UEM user has and/or how many MCSs the UEM user may, e.g., should, search for in the UEM fields corresponding to the UEM user.

In some demonstrative aspects, an MCS may be listed as spatial stream first or sub-RU/MRU first.

For example, it may be assumed that an RU/MRU assigned to a user has N subcarriers, and a minimum frequency segment is A. According to this example, a number of sub-RU/MRUs may be determined as *ceil(N*/*A),* which represents rounding to the nearest integer greater than or equal to *N*/*A.*

For example, it may be assumed that a number of spatial streams of the user is S. According to this example, the user may have *ceil(N*/*A)* LTEM fields, e.g., where each of which includes S MCSs.

In some demonstrative aspects, one or more non first-in-order LTEM fields may follow a first-in-order UEM field. For example, as shown in Fig. 7, non first-in-order UEM field 707 may follow, e.g., immediately follow, first-in-order UEM field 705.

In some demonstrative aspects, as shown in Fig. 7, UEM field 707 may include, e.g., may only include, MCS subfields, which may be followed by padding bits.

In some demonstrative aspects, as shown in Fig. 7, only a first MCS subfield in a UEM field may include a 4-bit binary number representing a first MCS index, while other MCS subfields may include 2-bit binary numbers representing other MCS indexes based on the first MCS index, e.g., as described above.

For example, MCS subfield 712 may indicate an MCS index with an MCS of a first sub-RU/MRU and a first spatial stream.

In some demonstrative aspects, in order to reduce overhead, other, e.g., non-first, MCS subfields may include 2-bit (or 3-bit) MCS binary numbers. In one example, the non-first MCS subfields may indicate a modulation order decrease or increase with respect to an MCS of a previous spatial stream, or with respect to an MCS of a previous sub-RU/MRU on the same spatial stream.

In some demonstrative aspects, non-first MCS subfields may be configured to indicate changes of modulation order and coding rate, for example, with respect to the previous spatial stream or sub-RU/MRU, e.g., to provide a technical solution for supporting horizontal encoding.

In some demonstrative aspects, UEM fields of a user may, e.g., may always, line up sequentially, for example, such that UEM field indicator subfields of user fields may, e.g., may only need to, point out the location of the first UEM field, e.g., UEM field-1, for example, while the rest of UEM fields may be automatically determined.

In some demonstrative aspects, new user-specific fields, e.g., user field 500 (Fig. 5), user-specific field 600 (Fig. 6), and/or user field 700 (Fig. 7), may be designed and proposed to provide a technical solution to enable allocation of an unequal MCS over frequency sub-channels and/or over both frequency channels and spatial streams, e.g., as described above.

In some demonstrative aspects, new user-specific fields, e.g., user field 500 (Fig. 5) and/or user field 700 (Fig. 7), and/or new UEM fields, e.g., UEM field 505 (Fig. 5), UEM field 507 (Fig. 5), LTEM field 705 (Fig. 7), and/or LTEM field 707 (Fig. 7), may be defined signaling of MCS types of users and locations of UEM fields carrying MCS information, for example, by new subfields, MCS type subfields and/or UEM field indicator subfields, e.g., as described above.

In some demonstrative aspects, user field 500 (Fig. 5), user-specific field 600 (Fig. 6), and/or user field 700 (Fig. 7), may be configured to provide a technical solution to support using only one user field for each user, for example, while UEM fields may not be required to carry the STA-ID subfield for blind scanning. Accordingly, user field 500 (Fig. 5), user-specific field 600 (Fig. 6), and/or user field 700 (Fig. 7), may be configured to provide a technical solution to save a tremendous amount of bits, thus lowering overhead.

In some demonstrative aspects, user field 500 (Fig. 5), user-specific field 600 (Fig. 6), and/or user field 700 (Fig. 7), may be configured to provide a technical solution for implementation by future and/or new protocols and/or specifications, e.g., for Wi-Fi 8 (UHR).

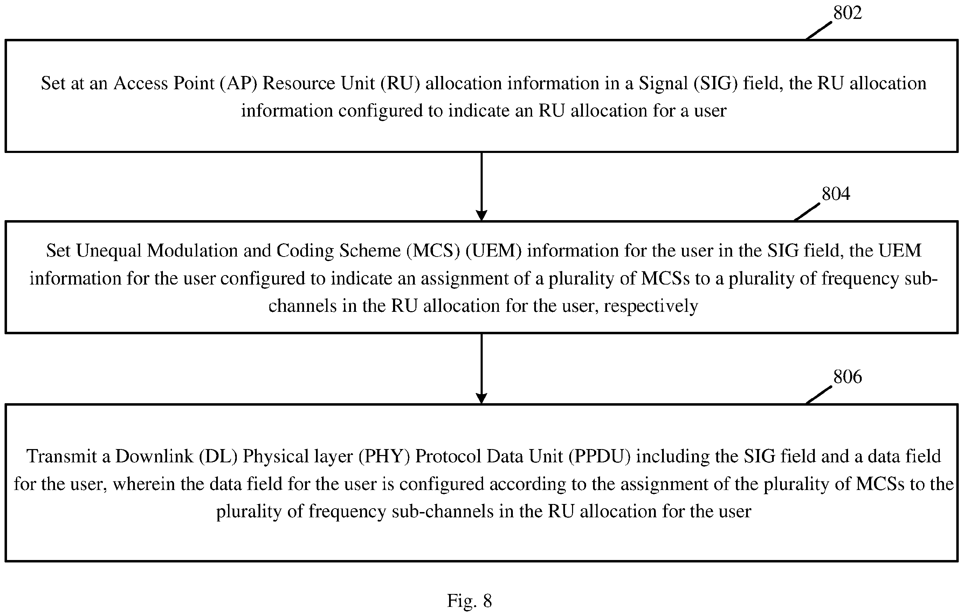

Reference is made to Fig. 8, which schematically illustrates a method of communicating UEM information, in accordance with some demonstrative aspects. For example, one or more of the operations of the method of Fig. 8 may be performed by one or more elements of a system, e.g., system 100 (Fig. 1), for example, one or more wireless devices, e.g., device 102 (Fig. 1), device 140 (Fig. 1), and/or device 160 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 802, the method may include setting at an AP RU allocation information in a SIG field. For example, the RU allocation information may be configured to indicate an RU allocation for a user. For example, controller 124 (Fig. 1) may be configured to cause, trigger, and/or control device 102 (Fig. 1) to set RU allocation information in a SIG field, for example, to indicate an RU allocation for a user, e.g., as described above.

As indicated at block 804, the method may include setting UEM information for the user in the SIG field. For example, the UEM information for the user may be configured to indicate an assignment of a plurality of MCSs to a plurality of frequency sub-channels in the RU allocation for the user, respectively. For example, controller 124 (Fig. 1) may be configured to cause, trigger, and/or control device 102 (Fig. 1) to set UEM information for the user in the SIG field, for example, to indicate an assignment of a plurality of MCSs to a plurality of frequency sub-channels in the RU allocation for the user, respectively, e.g., as described above.

As indicated at block 806, the method may include transmitting a DL PPDU including the SIG field and a data field for the user. For example, the data field for the user may be configured according to the assignment of the plurality of MCSs to the plurality of frequency sub-channels in the RU allocation for the user. For example, controller 124 (Fig. 1) may be configured to cause, trigger, and/or control device 102 (Fig. 1) to transmit a DL PPDU including the SIG field and the data field for the user, e.g., as described above.

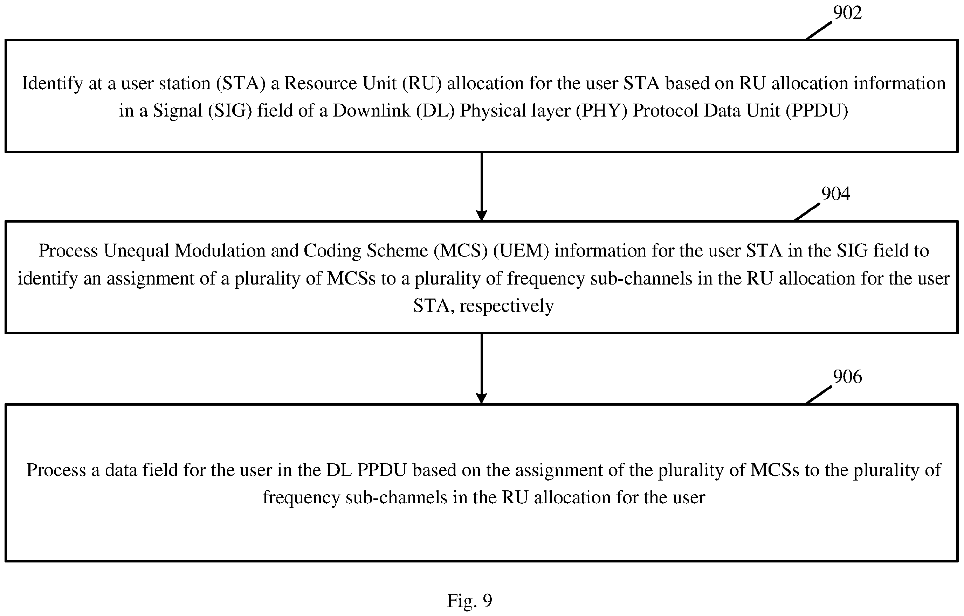

Reference is made to Fig. 9, which schematically illustrates a method of communicating UEM information, in accordance with some demonstrative aspects. For example, one or more of the operations of the method of Fig. 9 may be performed by one or more elements of a system, e.g., system 100 (Fig. 1), for example, one or more wireless devices, e.g., device 102 (Fig. 1), device 140 (Fig. 1), and/or device 160 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 902, the method may include identifying at a user STA an RU allocation for the user STA based on RU allocation information in a SIG field of a DL PPDU. For example, controller 154 (Fig. 1) may be configured to cause, trigger, and/or control device 140 (Fig. 1) to identify an RU allocation for device 140 (Fig. 1) based on RU allocation information in a SIG field of a DL PPDU, e.g., as described above.

As indicated at block 904, the method may include processing UEM information for the user STA in the SIG field to identify an assignment of a plurality of MCSs to a plurality of frequency sub-channels in the RU allocation for the user STA, respectively. For example, controller 154 (Fig. 1) may be configured to cause, trigger, and/or control device 140 (Fig. 1) to process UEM information for device 140 (Fig. 1) in the SIG field to identify an assignment of a plurality of MCSs to a plurality of frequency sub-channels in the RU allocation for device 140 (Fig. 1), respectively, e.g., as described above.

As indicated at block 906, the method may include processing a data field for the user STA in the DL PPDU based on the assignment of the plurality of MCSs to the plurality of frequency sub-channels in the RU allocation for the user STA. For example, controller 154 (Fig. 1) may be configured to cause, trigger, and/or control device 140 (Fig. 1) to process a data field for device 140 (Fig. 1) in the DL PPDU based on the assignment of the plurality of MCSs to the plurality of frequency sub-channels in the RU allocation for device 140 (Fig. 1), e.g., as described above.

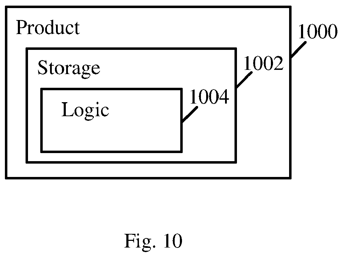

Reference is made to Fig. 10, which schematically illustrates a product of manufacture 1000, in accordance with some demonstrative aspects. Product 1000 may include one or more tangible computer-readable ("machine-readable") non-transitory storage media 1002, which may include computer-executable instructions, e.g., implemented by logic 1004, operable to, when executed by at least one computer processor, enable the at least one computer processor to implement one or more operations at device 102 (Fig. 1), device 140 (Fig. 1), device 160 (Fig. 1), controller 124 (Fig. 1), controller 154 (Fig. 1), message processor 128 (Fig. 1), message processor 158 (Fig. 1), radio 114 (Fig. 1), radio 144 (Fig. 1), transmitter 118 (Fig. 1), transmitter 148 (Fig. 1), receiver 116 (Fig. 1), and/or receiver 146 (Fig. 1); to cause device 102 (Fig. 1), device 140 (Fig. 1), device 160 (Fig. 1), controller 124 (Fig. 1), controller 154 (Fig. 1), message processor 128 (Fig. 1), message processor 158 (Fig. 1), radio 114 (Fig. 1), radio 144 (Fig. 1), transmitter 118 (Fig. 1), transmitter 148 (Fig. 1), receiver 116 (Fig. 1), and/or receiver 146 (Fig. 1) to perform, trigger and/or implement one or more operations and/or functionalities; and/or to perform, trigger and/or implement one or more operations and/or functionalities described with reference to the Figs. 1, 2, 3, 4, 5, 6, 7, 8, and/or 9, and/or one or more operations described herein. The phrases "non-transitory machine-readable medium" and "computer-readable non-transitory storage media" may be directed to include all machine and/or computer readable media, with the sole exception being a transitory propagating signal.

In some demonstrative aspects, product 1000 and/or machine readable storage media 1002 may include one or more types of computer-readable storage media capable of storing data, including volatile memory, non-volatile memory, removable or non-removable memory, erasable or non-erasable memory, writeable or re-writeable memory, and the like. For example, machine readable storage media 1002 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), flash memory (e.g., NOR or NAND flash memory), content addressable memory (CAM), polymer memory, phase-change memory, ferroelectric memory, silicon-oxide-nitride-oxide-silicon (SONOS) memory, a disk, a hard drive, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some demonstrative aspects, logic 1004 may include instructions, data, and/or code, which, if executed by a machine, may cause the machine to perform a method, process and/or operations as described herein. The machine may include, for example, any suitable processing platform, computing platform, computing device, processing device, computing system, processing system, computer, processor, or the like, and may be implemented using any suitable combination of hardware, software, firmware, and the like.

In some demonstrative aspects, logic 1004 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner or syntax, for instructing a processor to perform a certain function. The instructions may be implemented using any suitable high-level, low-level, object-oriented, visual, compiled and/or interpreted programming language, machine code, and the like.

### EXAMPLES

The following examples pertain to further aspects.

Example 1 includes an apparatus comprising logic and circuitry configured to cause an Access Point (AP) to set Resource Unit (RU) allocation information in a Signal (SIG) field, the RU allocation information configured to indicate an RU allocation for a user; set Unequal Modulation and Coding Scheme (MCS) (UEM) information for the user in the SIG field, the UEM information for the user configured to indicate an assignment of a plurality of MCSs to a plurality of frequency sub-channels in the RU allocation for the user, respectively; and transmit a Downlink (DL) Physical layer (PHY) Protocol Data Unit (PPDU) comprising the SIG field and a data field for the user, wherein the data field for the user is configured according to the assignment of the plurality of MCSs to the plurality of frequency sub-channels in the RU allocation for the user.

Example 2 includes the subject matter of Example 1, and optionally, wherein the apparatus is configured to cause the AP to set a user field for the user and at least one UEM field for the user in the SIG field, wherein the user field for the user is configured to indicate that the user has a UEM assignment, wherein the at least one UEM field for the user comprises the UEM information for the user.

Example 3 includes the subject matter of Example 2, and optionally, wherein the apparatus is configured to cause the AP to set a predefined MCS type value in an MCS type subfield in the user field for the user, the predefined MCS type value to indicate that the user has the UEM assignment.

Example 4 includes the subject matter of Example 3, and optionally, wherein the predefined MCS type value is configured to indicate a type of the LTEM assignment from a plurality of predefined UEM assignment types.

Example 5 includes the subject matter of Example 4, and optionally, wherein the plurality of predefined UEM assignment types comprises at least one of a UEM assignment over frequency sub-channels, a LTEM assignment over spatial streams, or a LTEM assignment over both frequency sub-channels and spatial streams.

Example 6 includes the subject matter of any one of Examples 3-5, and optionally, wherein the MCS type subfield has a size of 2 bits.

Example 7 includes the subject matter of any one of Examples 3-6, and optionally, wherein the apparatus is configured to cause the AP to set a UEM field indicator subfield in the user field for the user, wherein the UEM field indicator subfield is configured to indicate a position of a first UEM field of the at least one UEM field for the user in the SIG field.

Example 8 includes the subject matter of any one of Examples 3-7, and optionally, wherein the at least one LTEM field for the user is configured according to a UEM field format comprising a plurality of MCS subfields.

Example 9 includes the subject matter of Example 8, and optionally, wherein a first-in-order UEM field of the at least one UEM field for the user comprises a frequency segment subfield configured to indicate a segmentation of the RU allocation for the user into the plurality of frequency sub-channels.

Example 10 includes the subject matter of any one of Examples 3-9, and optionally, wherein the apparatus is configured to cause the AP to set a spatial configuration subfield in the user field for the user to indicate an assignment of a plurality of spatial streams for the user, wherein the UEM information for the user is configured to indicate an assignment of the plurality of MCSs to the plurality of spatial streams over the plurality of frequency sub-channels.

Example 11 includes the subject matter of Example 10, and optionally, wherein the at least one UEM field for the user comprises a plurality of UEM fields for the user, wherein a UEM field of the plurality of UEM fields for the user comprises frequency-channel specific UEM information corresponding to a frequency sub-channel of the plurality of frequency sub-channels.

Example 12 includes the subject matter of Example 11, and optionally, wherein the frequency-channel specific UEM information comprises a plurality of frequency-channel specific MCSs for the plurality of spatial streams over the frequency sub-channel.

Example 13 includes the subject matter of any one of Examples 10-12, and optionally, wherein the at least one UEM field for the user comprises a first LTEM field and a second LTEM field, wherein the first LTEM field comprises a first plurality of MCSs for the plurality of spatial streams over a first frequency sub-channel, wherein the second UEM field comprises a second plurality of MCSs for the plurality of spatial streams over a second frequency sub- channel.

Example 14 includes the subject matter of Example 2, and optionally, wherein the apparatus is configured to cause the AP to set a predefined MCS index in an MCS subfield in the user field for the user, wherein the predefined MCS index is configured to indicate that the user has the UEM assignment.

Example 15 includes the subject matter of Example 14, and optionally, wherein the predefined MCS index is 14.

Example 16 includes the subject matter of Example 14 or 15, and optionally, wherein the at least one UEM field for the user is configured according to a UEM field format comprising a station (STA) identifier (ID) (STA-ID) field to identify the user, and a plurality of MCS subfields after the STA-ID field.

Example 17 includes the subject matter of any one of Examples 14-16, and optionally, wherein the apparatus is configured to cause the AP to set a spatial configuration subfield in the user field for the user to indicate an assignment of a plurality of spatial streams for the user, wherein the UEM information for the user is configured to indicate an assignment of the plurality of MCSs to the plurality of spatial streams over the plurality of frequency sub-channels.

Example 18 includes the subject matter of any one of Examples 2-17, and optionally, wherein the apparatus is configured to cause the AP to encode the at least one UEM field for the user into one or more UEM encoding blocks according to a UEM encoding block format, wherein the UEM encoding block format comprises a UEM encoding block comprising two UEM fields, and a Cyclic Redundancy Check (CRC) field based on the two UEM fields.

Example 19 includes the subject matter of any one of Examples 2-18, and optionally, wherein the at least one UEM field for the user is after all user fields in the SIG field.

Example 20 includes the subject matter of Example 1, and optionally, wherein the apparatus is configured to cause the AP to set the LTEM information for the user in a plurality of user-fields for the user in the SIG field, the plurality of user-fields for the user configured to indicate the plurality of MCSs, respectively.

Example 21 includes the subject matter of Example 20, and optionally, wherein a user-field of the plurality of user-fields for the user comprises a station (STA) identifier (ID) (STA-ID) field comprising a STA-ID to identify the user, and an MCS field comprising an MCS of the plurality of MCSs.

Example 22 includes the subject matter of Example 20 or 21, and optionally, wherein each of the plurality of user-fields for the user comprises a same station (STA) identifier (ID) (STA-ID) to identify the user.

Example 23 includes the subject matter of any one of Examples 20-22, and optionally, wherein the apparatus is configured to cause the AP to set the RU allocation information to indicate an allocation of a plurality of sub-RUs for the user, wherein the plurality of sub-RUs for the user comprises the plurality of frequency sub-channels, respectively.

Example 24 includes the subject matter of any one of Examples 20-23, and optionally, wherein the apparatus is configured to cause the AP to set the plurality of user-fields for the user to indicate the plurality of MCSs according to an order of the plurality of frequency sub-channels in the RU allocation for the user.

Example 25 includes the subject matter of any one of Examples 20-24, and optionally, wherein a first-in-order user-field of the plurality of user-fields for the user comprises a station (STA) identifier (ID) (STA-ID) field, an MCS field after the STA-ID field, and a spatial configuration field after the MCS field.

Example 26 includes the subject matter of any one of Examples 20-25, and optionally, wherein a bit size of a user-field of the plurality of user-fields for the user is equal to a predefined bit size of a user field for a user with a single MCS assignment.

Example 27 includes the subject matter of any one of Examples 20-26, and optionally, wherein a user-field of the plurality of user-fields for the user has a bit size of 22 bits.

Example 28 includes the subject matter of any one of Examples 1-27, and optionally, wherein the SIG field comprises an Extremely High Throughput (EHT) SIG (EHT-SIG) field.

Example 29 includes the subject matter of any one of Examples 1-28, and optionally, wherein the DL PPDU comprises a Multi-User (MU) PPDU for a plurality of users comprising the user.

Example 30 includes the subject matter of any one of Examples 1-28, and optionally, wherein the DL PPDU comprises a Single User (SU) PPDU for the user.

Example 31 includes the subject matter of any one of Examples 1-30, and optionally, wherein the DL PPDU comprises an Extremely High Throughput (EHT) DL PPDU.

Example 32 includes the subject matter of any one of Examples 1-31, and optionally, wherein the DL PPDU comprises an Ultra High Reliability (UHR) DL PPDU.

Example 33 includes the subject matter of any one of Examples 1-32, and optionally, comprising at least one radio to transmit the DL PPDU.

Example 34 includes the subject matter of Example 33, and optionally, comprising one or more antennas connected to the radio, and a processor to execute instructions of an operating system of the AP.

Example 35 includes an apparatus comprising logic and circuitry configured to cause a user station (STA) to identify a Resource Unit (RU) allocation for the user STA based on RU allocation information in a Signal (SIG) field of a Downlink (DL) Physical layer (PHY) Protocol Data Unit (PPDU); process Unequal Modulation and Coding Scheme (MCS) (UEM) information for the user STA in the SIG field to identify an assignment of a plurality of MCSs to a plurality of frequency sub-channels in the RU allocation for the user STA, respectively; and process a data field for the user STA in the DL PPDU based on the assignment of the plurality of MCSs to the plurality of frequency sub-channels in the RU allocation for the user STA.

Example 36 includes the subject matter of Example 35, and optionally, wherein the apparatus is configured to cause the user STA to process a user field for the user STA and at least one UEM field for the user STA in the SIG field to identify that the user STA has a UEM assignment, wherein the at least one UEM field for the user STA comprises the LTEM information for the user STA.

Example 37 includes the subject matter of Example 36, and optionally, wherein the apparatus is configured to cause the user STA to identify that the user STA has the UEM assignment based on a predefined MCS type value in an MCS type subfield in the user field for the user STA.

Example 38 includes the subject matter of Example 37, and optionally, wherein the predefined MCS type value is configured to indicate a type of the UEM assignment from a plurality of predefined UEM assignment types.

Example 39 includes the subject matter of Example 38, and optionally, wherein the plurality of predefined UEM assignment types comprises at least one of a UEM assignment over frequency sub-channels, a UEM assignment over spatial streams, or a UEM assignment over both frequency sub-channels and spatial streams.

Example 40 includes the subject matter of any one of Examples 37-39, and optionally, wherein the MCS type subfield has a size of 2 bits.

Example 41 includes the subject matter of any one of Examples 37-40, and optionally, wherein the apparatus is configured to cause the user STA to identify a position of a first UEM field of the at least one UEM field for the user STA in the SIG field based on a UEM field indicator subfield in the user field for the user STA.

Example 42 includes the subject matter of any one of Examples 37-41, and optionally, wherein the at least one UEM field for the user STA is configured according to a UEM field format comprising a plurality of MCS subfields.

Example 43 includes the subject matter of Example 42, and optionally, wherein a first-in-order UEM field of the at least one UEM field for the user STA comprises a frequency segment subfield configured to indicate a segmentation of the RU allocation for the user STA into the plurality of frequency sub-channels.

Example 44 includes the subject matter of any one of Examples 37-43, and optionally, wherein the apparatus is configured to cause the user STA to identify an assignment of a plurality of spatial streams for the user STA based on a spatial configuration subfield in the user field for the user STA, wherein the UEM information for the user STA is configured to indicate an assignment of the plurality of MCSs to the plurality of spatial streams over the plurality of frequency sub-channels.

Example 45 includes the subject matter of Example 44, and optionally, wherein the at least one UEM field for the user STA comprises a plurality of UEM fields for the user STA, wherein a UEM field of the plurality of UEM fields for the user STA comprises frequency-channel specific UEM information corresponding to a frequency sub-channel of the plurality of frequency sub-channels.

Example 46 includes the subject matter of Example 45, and optionally, wherein the frequency-channel specific UEM information comprises a plurality of frequency-channel specific MCSs for the plurality of spatial streams over the frequency sub-channel.

Example 47 includes the subject matter of any one of Examples 44-46, and optionally, wherein the at least one UEM field for the user STA comprises a first UEM field and a second UEM field, wherein the first UEM field comprises a first plurality of MCSs for the plurality of spatial streams over a first frequency sub-channel, wherein the second UEM field comprises a second plurality of MCSs for the plurality of spatial streams over a second frequency sub- channel.

Example 48 includes the subject matter of Example 36, and optionally, wherein the apparatus is configured to cause the user STA to identify that the user has the UEM assignment based on a predefined MCS index in an MCS subfield in the user field for the user STA.

Example 49 includes the subject matter of Example 48, and optionally, wherein the predefined MCS index is 14.

Example 50 includes the subject matter of Example 48 or 49, and optionally, wherein the at least one UEM field for the user STA is configured according to a UEM field format comprising a station (STA) identifier (ID) (STA-ID) field to identify the user STA, and a plurality of MCS subfields after the STA-ID field.

Example 51 includes the subject matter of any one of Examples 48-50, and optionally, wherein the apparatus is configured to cause the user STA to identify an assignment of a plurality of spatial streams for the user STA based on a spatial configuration subfield in the user field for the user STA, wherein the UEM information for the user STA is configured to indicate an assignment of the plurality of MCSs to the plurality of spatial streams over the plurality of frequency sub-channels.

Example 52 includes the subject matter of any one of Examples 36-51, and optionally, wherein the apparatus is configured to cause the user STA to decode the at least one UEM field for the user STA from one or more UEM encoding blocks according to a UEM encoding block format, wherein the LTEM encoding block format comprises a UEM encoding block comprising two UEM fields, and a Cyclic Redundancy Check (CRC) field based on the two UEM fields.

Example 53 includes the subject matter of any one of Examples 36-52, and optionally, wherein the at least one UEM field for the user STA is after all user fields in the SIG field.

Example 54 includes the subject matter of Example 35, and optionally, wherein the apparatus is configured to cause the user STA to identify the UEM information for the user in a plurality of user-fields for the user in the SIG field, the plurality of user-fields for the user configured to indicate the plurality of MCSs, respectively.

Example 55 includes the subject matter of Example 54, and optionally, wherein a user-field of the plurality of user-fields for the user STA comprises a station (STA) identifier (ID) (STA-ID) field comprising a STA-ID to identify the user STA, and an MCS field comprising an MCS of the plurality of MCSs.

Example 56 includes the subject matter of Example 54 or 55, and optionally, wherein each of the plurality of user-fields for the user STA comprises a same station (STA) identifier (ID) (STA-ID) to identify the user STA.

Example 57 includes the subject matter of any one of Examples 54-56, and optionally, wherein the apparatus is configured to cause the user STA to process the RU allocation information to identify an allocation of a plurality of sub-RUs for the user STA, wherein the plurality of sub-RUs for the user comprises the plurality of frequency sub-channels, respectively.

Example 58 includes the subject matter of any one of Examples 54-57, and optionally, wherein the apparatus is configured to cause the user STA to process the plurality of user-fields for the user to identify the plurality of MCSs according to an order of the plurality of frequency sub-channels in the RU allocation for the user STA.

Example 59 includes the subject matter of any one of Examples 54-58, and optionally, wherein a first-in-order user-field of the plurality of user-fields for the user STA comprises a station (STA) identifier (ID) (STA-ID) field, an MCS field after the STA-ID field, and a spatial configuration field after the MCS field.

Example 60 includes the subject matter of any one of Examples 54-59, and optionally, wherein a bit size of a user-field of the plurality of user-fields for the user STA is equal to a predefined bit size of a user field for a user STA with a single MCS assignment.

Example 61 includes the subject matter of any one of Examples 54-60, and optionally, wherein a user-field of the plurality of user-fields for the user STA has a bit size of 22 bits.

Example 62 includes the subject matter of any one of Examples 35-61, and optionally, wherein the SIG field comprises an Extremely High Throughput (EHT) SIG (EHT-SIG) field.

Example 63 includes the subject matter of any one of Examples 35-62, and optionally, wherein the DL PPDU comprises a Multi-User (MU) PPDU for a plurality of users comprising the user STA.

Example 64 includes the subject matter of any one of Examples 35-62, and optionally, wherein the DL PPDU comprises a Single User (SU) PPDU for the user STA.

Example 65 includes the subject matter of any one of Examples 35-64, and optionally, wherein the DL PPDU comprises an Extremely High Throughput (EHT) DL PPDU.

Example 66 includes the subject matter of any one of Examples 35-65, and optionally, wherein the DL PPDU comprises an Ultra High Reliability (UHR) DL PPDU.

Example 67 includes the subject matter of any one of Examples 35-66, and optionally, comprising at least one radio to receive the DL PPDU.

Example 68 includes the subject matter of Example 67, and optionally, comprising one or more antennas connected to the radio, and a processor to execute instructions of an operating system of the user STA.

Example 69 comprises a wireless communication device comprising the apparatus of any of Examples 1-68.

Example 70 comprises a mobile device comprising the apparatus of any of Examples 1-68.

Example 71 comprises an apparatus comprising means for executing any of the described operations of any of Examples 1-68.

Example 72 comprises a product comprising one or more tangible computer-readable non-transitory storage media comprising instructions operable to, when executed by at least one processor, enable the at least one processor to cause a wireless communication device to perform any of the described operations of any of Examples 1-68.

Example 73 comprises an apparatus comprising: a memory interface; and processing circuitry configured to: perform any of the described operations of any of Examples 1-68.

Example 74 comprises a method comprising any of the described operations of any of Examples 1-68.

Functions, operations, components and/or features described herein with reference to one or more aspects, may be combined with, or may be utilized in combination with, one or more other functions, operations, components and/or features described herein with reference to one or more other aspects, or vice versa.

While certain features have been illustrated and described herein, many modifications, substitutions, changes, and equivalents may occur to those skilled in the art. It is, therefore, to be understood that the appended claims are intended to cover all such modifications and changes as fall within the true spirit of the disclosure.

## Claims

1. A method to be performed at an Access Point (AP), the method comprising:
setting Resource Unit (RU) allocation information in a Signal (SIG) field, the RU allocation information configured to indicate an RU allocation for a user;
setting Unequal Modulation and Coding Scheme (MCS) (UEM) information for the user in the SIG field, the LTEM information for the user configured to indicate an assignment of a plurality of MCSs to a plurality of frequency sub-channels in the RU allocation for the user, respectively; and
transmitting a Downlink (DL) Physical layer (PHY) Protocol Data Unit (PPDU) comprising the SIG field and a data field for the user, wherein the data field for the user is configured according to the assignment of the plurality of MCSs to the plurality of frequency sub-channels in the RU allocation for the user.

2. The method of claim 1 comprising setting a user field for the user and at least one UEM field for the user in the SIG field, wherein the user field for the user is configured to indicate that the user has a UEM assignment, wherein the at least one UEM field for the user comprises the UEM information for the user.

3. The method of claim 2 comprising setting a predefined MCS type value in an MCS type subfield in the user field for the user, the predefined MCS type value to indicate that the user has the UEM assignment.

4. The method of claim 3, wherein the predefined MCS type value is configured to indicate a type of the UEM assignment from a plurality of predefined UEM assignment types.

5. The method of claim 4, wherein the plurality of predefined UEM assignment types comprises at least one of a UEM assignment over frequency sub-channels, a UEM assignment over spatial streams, or a UEM assignment over both frequency sub-channels and spatial streams.

6. The method of any one of claims 2-5 comprising setting a UEM field indicator subfield in the user field for the user, wherein the UEM field indicator subfield is configured to indicate a position of a first UEM field of the at least one UEM field for the user in the SIG field.

7. The method of any one of claims 2-6, wherein the at least one UEM field for the user is configured according to a UEM field format comprising a plurality of MCS subfields.

8. The method of claim 7, wherein a first-in-order UEM field of the at least one UEM field for the user comprises a frequency segment subfield configured to indicate a segmentation of the RU allocation for the user into the plurality of frequency sub-channels.

9. The method of any one of claims 2-8 comprising setting a spatial configuration subfield in the user field for the user to indicate an assignment of a plurality of spatial streams for the user, wherein the UEM information for the user is configured to indicate an assignment of the plurality of MCSs to the plurality of spatial streams over the plurality of frequency sub-channels.

10. The method of claim 9, wherein the at least one UEM field for the user comprises a plurality of UEM fields for the user, wherein a UEM field of the plurality of UEM fields for the user comprises frequency-channel specific UEM information corresponding to a frequency sub-channel of the plurality of frequency sub-channels.

11. The method of any one of claims 2-10 comprising setting a predefined MCS index in an MCS subfield in the user field for the user, wherein the predefined MCS index is configured to indicate that the user has the UEM assignment.

12. The method of claim 1 comprising setting the UEM information for the user in a plurality of user-fields for the user in the SIG field, the plurality of user-fields for the user configured to indicate the plurality of MCSs, respectively.

13. An apparatus comprising a controller configured to cause a wireless communication device to perform the method of any one of claims 1-12.

14. The apparatus of claim 13 comprising at least one radio to transmit the DL PPDU, one or more antennas connected to the radio, and a processor to execute instructions of an operating system.

15. A product comprising one or more tangible computer-readable non-transitory storage media comprising instructions operable to, when executed by at least one processor, enable the at least one processor to cause an Access Point (AP) to perform the method of any one of claims 1-12.
